# EUROPEAN PATENT APPLICATION

(11) **EP 2 226 522 A1**
(43) Date of publication of application: **08.09.2010**
(21) Application number: 08861382.3
(22) Date of filing: 11.12.2008
(51) Int. Cl.: F16C 33/64, B21H 1/06, B60B 35/02, B60B 35/14, B60B 35/18, F16C 19/18, F16C 33/62

(54) **DOUBLE-ROW ANGULAR BEARING, BEARING DEVICE FOR WHEEL, METHOD OF PRODUCING OUTER RING, AND METHOD OF PRODUCING INNER RING**

(30) Priority: 17.12.2007 JP 2007324696; 28.12.2007 JP 2007340522; 21.02.2008 JP 2008040114; 21.02.2008 JP 2008040120
(71) Applicant: NTN Corporation, Osaka-shi, Osaka 550-0003 (JP)
(72) Inventor: KURODA, Masayuki, Iwata-shi Shizuoka 438-0037 (JP); FUKUSHIMA, Shigeaki, Iwata-shi Shizuoka 438-0037 (JP); KATO, Hiroya, Iwata-shi Shizuoka 438-0037 (JP); HIRAI, Isao, Iwata-shi Shizuoka 438-0037 (JP); KOBAYASHI, Keizo, Iwata-shi Shizuoka 438-0037 (JP)
(74) Representative: Grünecker, Kinkeldey, Stockmair & Schwanhäusser Anwaltssozietät
(86) International application number: PCT/JP2008/072544
(87) International publication number: WO 2009/078337

(57) **Abstract**

Provided are: a double-row angular bearing capable of enhancing its rolling life and cost reduction; a bearing device for a wheel, which is capable of reducing a number of assembling process steps in an assembly factory of automobiles and the like, is excellent in productivity, and is capable of cost reduction; and a method of producing an outer race and an inner race of a bearing, which can achieve their weight reduction to a large extent. The double-row angular bearing includes: an inner race having inner rolling surfaces on a radially outer surface thereof; an outer race having outer rolling surfaces on a radially inner surface thereof; and rolling elements rotatably housed between the outer rolling surfaces of the outer race and the inner rolling surfaces of the inner race. The outer race or the inner race is formed of a plastically worked article formed by cold rolling.

## Description

### Technical Field

The present invention relates to a double-row angular bearing, a bearing device for a wheel, an outer race production method of producing an outer race of the bearing device for a wheel, and an inner race production method of producing an inner race of the bearing device for a wheel.

### Background Art

The bearing device for a wheel has evolved from a structure called first generation in which double-row roller bearings are independently used to second generation in which a vehicle body attachment flange is integrally provided in an outer member. Further,third generationin which oneinnerrollingsurface of the double-row roller bearings is integrally formed with an outer circumference of a hub wheel integrally having a wheel attachment flange has been developed. Further, fourth generation in which a constant velocity universal joint is integrated with the roller bearing and another inner rolling surface of the double-row roller bearings is integrally formed with an outer circumference of an outer joint member constituting the constant velocity universal joint has been developed.

It is necessary that the bearing device for a wheel, which is as described above, be attached to a knuckle on a vehicle body side. The second and subsequent generations of the bearing39 devices for a wheel, each including the vehicle body attachment flange, can be attached to the knuckle with bolts, whereas it is necessary to press-fit the first generation of the bearing device for a wheel into the knuckle, and the number of man-hours is required to assemble and replace the bearing device. However, the first generation of the bearing device for a wheel can be produced at lower cost than the second and third generations of the bearing devices for a wheel, and hence the first generation of the bearing device for a wheel is used for a small automobile in many cases.

The bearing device for a wheel called first generation (for example, Patent Literature 1) includes, as illustrated in FIG. 30, a hub wheel 152 having a flange 151 extending in a radially outer direction, a constant velocity universal joint 154 having an outer joint member 153 fixed to the hub wheel 152, and a bearing 150 arranged on an outer circumferential side of the hub wheel 152.

The constant velocity universal joint 154 includes the outer joint member 153, an inner joint member (not shown) arranged in the outer joint member 153, a ball (not shown) arranged between the inner joint member and the outer joint member 153, and a cage (not shown) that retains the ball. The outer joint member 153 is formed of a cup-shaped mouth section 157 in which the inner joint member is housed, and a shaft section (stem section) 173 provided to protrude from the mouth section 157.

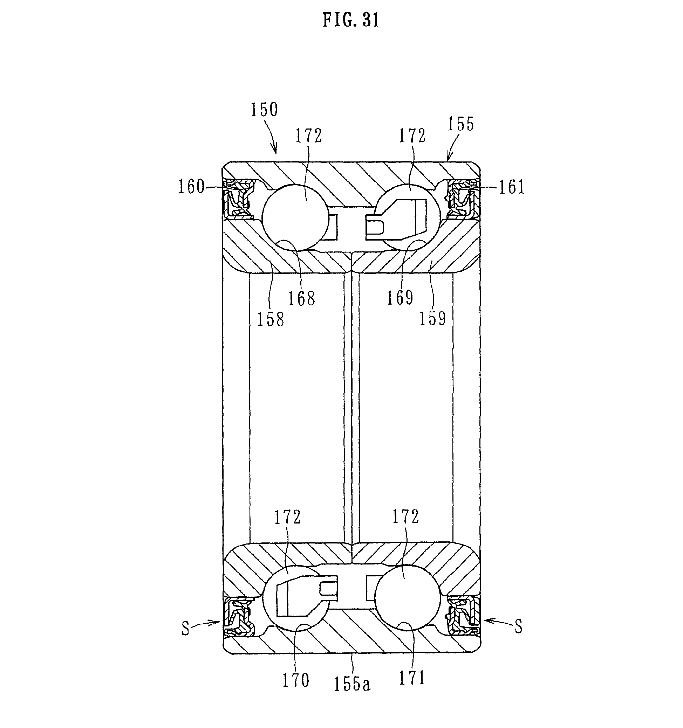

Further, the hub wheel 152 includes a cylindrical section 163 and the flange 151. A larger-diameter first portion 165a and a smaller-diameter second portion 165b are formed in an outer end surface 164 (end surface on a side opposite to the joint) of the flange 151. A brake rotor 190 is externally fitted onto the first portion 165a, and a wheel (not shown) is externally fitted onto the second portion 165b. Further, axially opening portions between an outer race 155 and inner races 158 and 159 are closed with seal members S and S. Therefore, seal mounting grooves 160 and 161 (refer to FIG. 31) are provided in axially opening end portions in an inner diameter surface of the outer race 155.

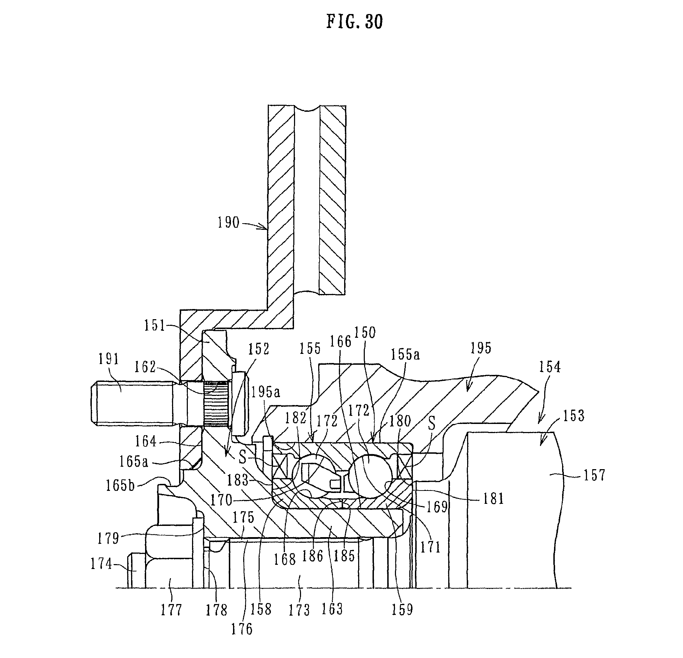

As illustrated in FIG. 31, the bearing 150 includes: the outer race 155 having double-row outer rolling surfaces 170 and 171 formed in an inner circumference thereof; a pair of the inner races 158 and 159 having inner rolling surfaces 168 and 169 formed in outer circumferences thereof, which are opposed to the outer rolling surfaces; and double-row rolling elements 172 rotatably housed between the outer rolling surfaces 170 and 171 of the outer race 155 and the inner rolling surfaces 168 and 169 of the inner races 158 and 159. Then, as illustrated in FIG. 30, an outer peripheral surface 166 of the cylindrical section 163 of the hub wheel 152 is provided and inner races 158 and 159 are fitted to the outer peripheral surface 166. Further, a bolt inserting hole 162 is provided in the flange 151 of the hub wheel 152. A hub bolt 191 for fixing the wheel (not shown) and the brake rotor 190 to the flange 151 is inserted into the bolt inserting hole 162.

A shaft section 173 of the outer joint member 153 is inserted or press-fitted into the cylindrical section 163 of the hub wheel 152. In the shaft section 173, a screw section 174 is formed at an end portion of a reverse mouth section thereof. A spline portion 175 is formed between the screw section 174 and the mouth section 157. Further, a spline portion 176 is formed in an inner peripheral surface (inner surface) of the cylindrical section 163 of the hub wheel 152. When the shaft section 173 is inserted into the cylindrical section 163 of the hub wheel 152, the spline portion 175 on the shaft section 173 side and the spline portion 176 on the hub wheel 152 side are engaged.

A nut member 177 is screwed into the screw section 174 of the shaft section 173 projecting from the cylindrical section 163. The hub wheel 152 and the outer joint member 153 are connected. In this case, an inner end surface (back surface) 178 of the nut member 177 and an outer end surface 179 of the cylindrical section 163 are brought into contact with each other and an end surface 180 on the shaft section side of the mouth section 157 and an outer end surface 181 of the inner race 159 are brought into contact with each other. In other words, when the nut member 177 is tightened, the hub wheel 152 is sandwiched by the nut member 177 and the mouth section 157 through the inner races 158 and 159. In this case, in a state where a notched end surface (end surface of stepped portion) 182 of the hub wheel 152 and an outer end surface 183 of the inner race 158 are brought into contact with each other, and an end surface 180 of the mouth section 157 and an outer end surface 181 of the inner race 159 are brought into contact with each other, abutting surfaces 185 and 186 of the inner races 158 and 159 are allowed to abut against each other. In this case, a radially outer surface of the outer race 155 serves as a fitting surface 155a, and is press-fitted into a radially inner surface 195a of a knuckle 195 on a vehicle body side.

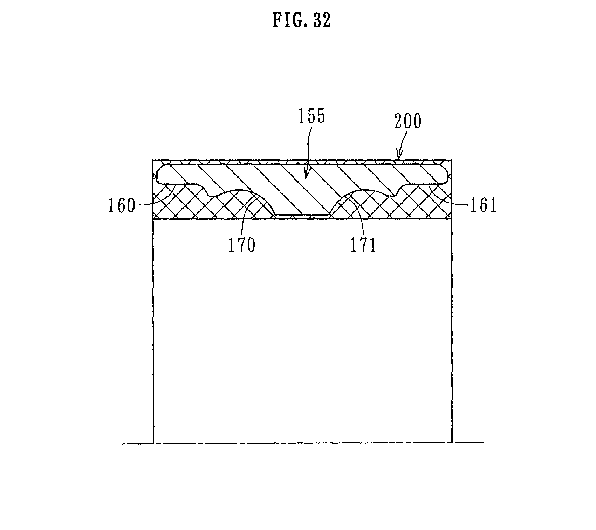

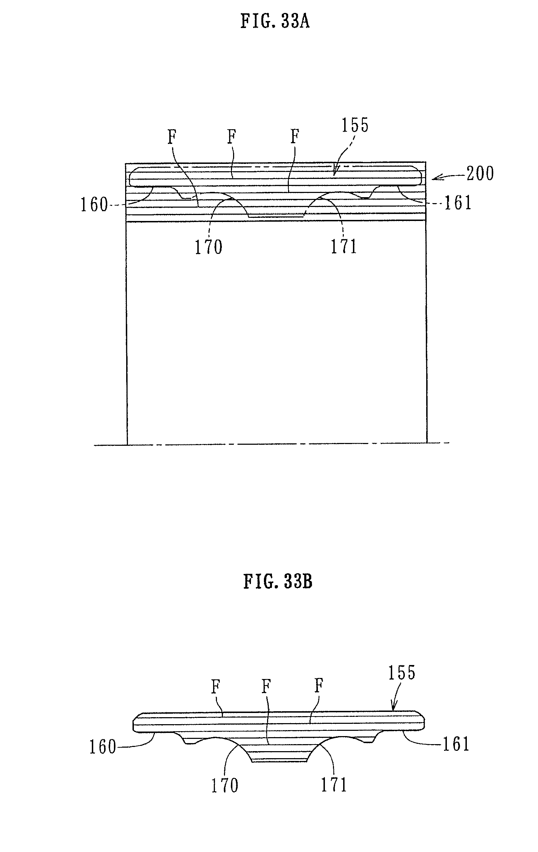

As illustrated in FIG. 32, in general, the outer race 155 is formed by cutting (such as lathing/turning) a range of a raw material 200 as a short cylindrical body, the range being illustrated by cross hatching. As illustrated in FIG. 33A, in the raw material 200, fiber flows F extend in an axial direction. Therefore, also in the formed outer race 155, as illustrated in FIG. 33B, the fiber flows F extend in the axial direction. Each of the fiber flows refers to a flow of a structure of a material, and also refers to a fibrous metal structure.

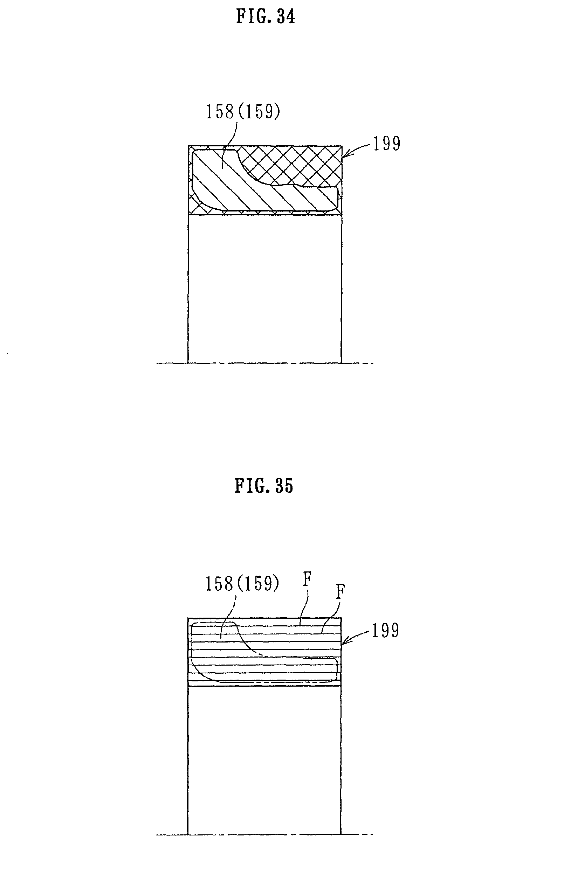

Further, as illustrated in FIG. 34, the inner race 158 (159) is also formed by cutting a range of a raw material 199 as a short cylindrical body, the range being illustrated by cross hatching. In this case, in the raw material 199, as illustrated in FIG. 35, the fiber flows F extend in the axial direction. Therefore, also in the formed inner race 158 (159), the fiber flows F extend in the axial direction.

Corrosion resistance is required for the double-row angular bearing used in an automotive wheel. Therefore, stainless steel (JIS SUS440C) and the like are used for the outer race and inner race of the bearing. The SUS440C (martensitic stainless steel) is steel for a corrosion resistant bearing, which is quenched/tempered, and is thereby capable of ensuring predetermined corrosion resistance while achieving hardness of 55HRC or more, which is hardness required for steel for a bearing.

However, as a range of uses for the corrosion resistant bearing has been expanded in recent years, a level of the corrosion resistance required for the corrosion resistant bearing is increased more and more. As steel excellent in corrosion resistance, for example, there is mentioned austenitic stainless steel such as JIS SUS304. The SUS304 has corrosion resistance exceeding that of the SUS440C, and accordingly, is more excellent than the SUS440C in view of the corrosion resistance.

Accordingly, there are those using the austenitic stainless steel for the inner race and outer race of the bearing (Patent Literature 2 and Patent Literature 3).

Further, in recent years, in order to achieve weight reduction and cost reduction, a bearing (double-row angular bearing) in which inner and outer races are formed by a rolling process has been proposed (Patent Literature 4). Here, cold rolling is a processing method of rolling a raw material (blank) while rotating the raw material kept in a cold state (at ordinary temperature) without applying heat thereto. Specifically, the cold rolling is a processing method of forming a work (finished article after processing) in such a manner that the blank (raw material) in which inner and outer diameters are smaller than those of the work and the inner and outer diameters are basically straight is sandwiched between two jigs (for radially inner and outer surfaces) designed into a shape to which the blank is desired to be processed, and the blank is then rolled while being rotated.

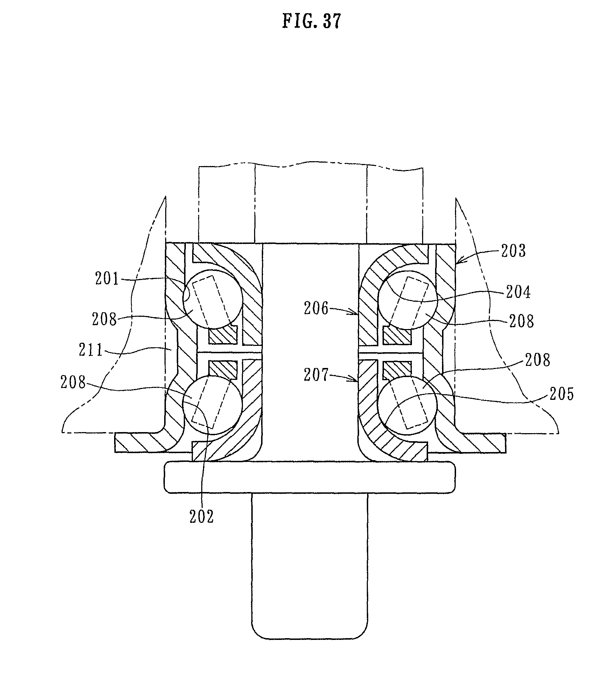

AsillustratedinFIG. 37, thedouble-rowangularbearing described in Patent Literature 4 includes: an outer race 203 that is made of a pressed steel plate and has double-row raceways 201 and 202; inner races 206 and 207 having raceways 204 and 205 corresponding to the double-row raceways 201 and 202 of the outer race203, respectively; and double-row rolling elements 208 arranged between the double-row raceways 201 and 202 of the outer race 203 and the raceways 204 and 205 of the inner races 206 and 207. In the bearing illustrated in FIG. 37, a recessed portion 211 is formed in an axial center portion of an outer peripheral surface of the outer race 203, whereby the raceways 201 and 202 are formed.

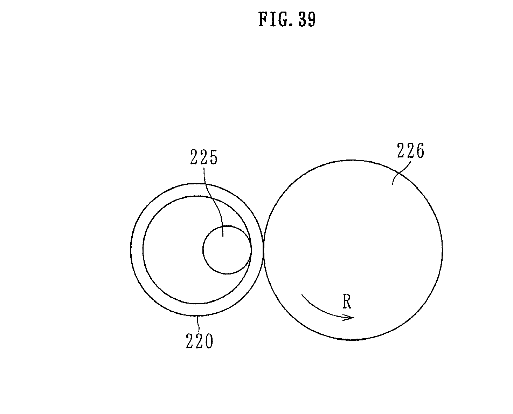

Specifically, as illustrated in FIG. 39, a cold rolling process machine includes: a mandrel 225 for a radially inner surface; and a forming roll 226 for a radially outer surface. The forming roll 226 is rotated about an axial center thereof as illustrated by the arrow R in a state where a raw material 220 is externally fitted to the mandrel 225, and where the raw material 220 is sandwiched by the mandrel 225 and the forming roll 226.

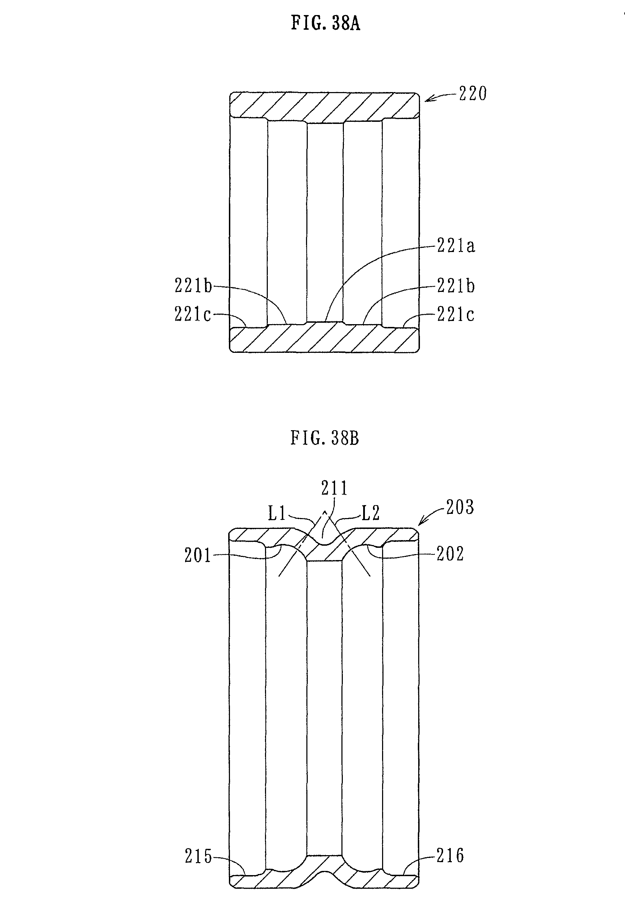

Incidentally, in the case of forming the outer race 203 having a shape as illustrated in FIG. 38B, seal mounting grooves 215 and 216 are formed in opening portions in a radially inner surface thereof, and hence a raw material having a shape as illustrated in FIG. 38A is formed as the outer race raw material 220. The outer race raw material 220 is a cylindrical body in which a radially inner surface is formed of a smaller-diameter portion 221a located on an axially intermediate portion, middle-diameter portions 221b arranged on both sides of the smaller-diameter portion 221a; and larger-diameter portions 221c located on opening sides.

If the outer race raw material 220 is formed into the outer race 203 by the cold rolling, the middle-diameter portions 221b and 221b of the raw material 220 form the raceways 201 and 202, and the larger-diameter portions 221c and 221c on the opening sides form the seal mounting grooves 215 and 216.

Further, in recent years, in order to achieve the weight reduction and the cost reduction, a method of press-forming the outer race and the inner race from a plate material or a pipe material has been proposed (Patent Literature 5).

### Citation List

Patent Literature 1: Japanese Patent Application Laid-open No. 2007-120771
Patent Literature 2: Japanese Patent Application Laid-open No. 2001-330038
Patent Literature 3: Japanese Patent Application Laid-open No. 2002-147467
Patent Literature 4: Japanese Utility Model Application Laid-open No. Hei 06-1835
Patent Literature 5: US Patent No. 5,177,869

### Summary of Invention

### Technical Problem

However, in the SUS material, much rare metal such as Cr is contained as compared with a steel material such as SUJ2 generally used for the bearing, and a unit price of the SUS material is high, bringing a cost increase. In addition, in the formingmethod as illustrated in FIG. 32, as a shape of the outer race, it is necessary to form the rolling surfaces, the seal grooves, and the like in the radially inner surface thereof, and a weight of the material to be removed (material loss, which is equal to a difference of a weight of the product from a weight of the charged material) is increased, and material cost is correspondingly increased. Also in the inner race, a weight of the material to be removed is increased, and the material cost is correspondingly increased.

Further, in the cutting process as illustrated in FIG. 33 and FIG. 35. the fiber flow is divided in the rolling surfaces. Therefore, cracks and exfoliations are prone to occur on the rolling surfaces, and a rolling life of outer race and inner races is shortened.

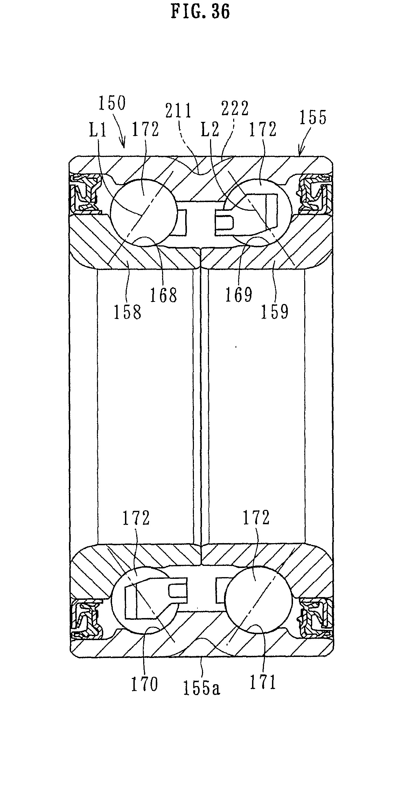

Further, in the bearing illustrated in FIG. 30, as illustrated in FIG. 38B, the recessed portion 211 is formed in the axial center portion of the outer peripheral surface of the outer race 203, whereby the raceways 201 and 202 are formed. In the case of using the bearing as described above for a bearing device for a wheel, which is illustrated in FIG. 31, a gap 222 (refer to FIG. 36) is formed between the outer peripheral surface of the outer race 155 and the radially inner surface of the knuckle due to the presence of the recessed portion 211.

In such a case, load application lines L1 and L2 (refer to FIG. 36) of the rolling elements intersect each other in the gap 222. Therefore, in order to obtain predetermined strength or rigidity of the outer race, it is necessary to thicken a thickness of a region on the load application lines, and eventually, a thickness of the entire outer race. However, if the thickness is thickened, the weight reduction and processability of the bearing device for a wheel are inhibited.

Further, even in a bearing device described above in Patent Literature 5, a problem that the number of man-hours is required for assembly and replacement thereof has not been improved yet. Specifically, even in the bearing device for a wheel, which is illustrated in the Patent Literature 5, a pre-load is imparted to the inner race through a shoulder portion (end surface 180 of the mouth section 157) of the outer joint member of the constant velocity universal joint. Therefore, the step of fitting the hub wheel into the bearing has not been able to be performed before shipment thereof to an assembly factory of automobiles, and it is necessary to perform the step in the assembly factory. In other words, the number of assembling process steps in the assembly factory of automobiles is large, and enhancement of productivity of the automobiles cannot also be performed.

Further, automobile manufacturers develop automobiles generally with emphasis on the environmental problems and the fuel consumption reduction (weight reduction). However, in the bearing devices for a wheel, which are illustrated in FIG. 30 and the like, a sectional area of each of the bearing devices for a wheel is relatively small, and the number of parts of each of the bearing devices for a wheel is relatively small. Accordingly, there are limitations on reducing the weight of each of the bearing devices for a wheel.

It is a first object of the present invention to provide a double-row angular bearing capable of achieving enhancement of a rolling life thereof, and in addition, capable of achieving cost reduction thereof. It is a second object of the present invention to provide a bearing device for a wheel, which is capable of reducing the number of assembling process steps in an assembly factory of automobiles and the like, is excellent in productivity, and is capable of achieving the cost reduction. It is a third object of the present invention to provide a bearing device for a wheel, which can achieve the weight reduction, and to provide an outer race production method capable of producing an outer race of a roller bearing optimum for being used in such a bearing device for a wheel. It is a fourth object of the present invention to provide a bearing device for a wheel and a method of producing an inner race of a bearing, which can achieve the weight reduction of the inner race of the bearing to a large extent, and can achieve the fuel consumption reduction.

### Solution to Problem

A first double-row angular bearing of the present invention includes: an inner race having inner rolling surfaces on a radially outer surface thereof; an outer race having outer rolling surfaces on a radially inner surface thereof; and rolling elements rotatably housed between the outer rolling surfaces of the outer race and the inner rolling surfaces of the inner race, in which the outer race is formed of a plastically worked article formed by cold rolling. Here, the cold rolling is a processing method of rolling a raw material (blank) while rotating the raw material kept in a cold state (at ordinary temperature) without applying heat thereto. Specifically, the cold rolling is a processing method of forming a work (finished article subjected to the process) in such a manner that the blank (raw material), in which inner and outer diameters are smaller than those of the work and the inner and outer diameters are basically straight, is sandwiched between two jigs (for radially inner and outer surfaces) designed into a shape to which the blank is desired to be processed, and the blank is then rolled while being rotated.

It is preferred that an annular recessed portion be provided in an axial center portion of a radially outer surface of the outer race. In this case, an expanded portion expanded to a radially inner side is provided on an axial center portion of the radially inner surface of the outer race, whereby the annular recessed portion can be provided in the axial center portion of the radially outer surface of the outer race. Specifically, the expanded portion expanded to the radially inner side is provided in the axial center portion of the radially inner surface of the outer race, whereby the rolling surfaces can be formed in the radially inner surface of the outer race. In addition, a thickness of the outer race can be maintained to be substantially constant along an axial direction thereof.

A second double-row angular bearing of the present invention includes: an inner race having inner rolling surfaces on a radially outer surface thereof; an outer race having outer rolling surfaces on a radially inner surface thereof; and rolling elements rotatably housed between the outer rolling surfaces of the outer race and the inner rolling surfaces of the inner race, in which the inner race is formed of a plastically worked article formed by one of cold rolling and press working.

In the double-row angular bearing of the present invention, at least one of the outer race and the inner race is formed of the plastically worked article formed by the cold rolling. Accordingly, an enhancement of yield of the plastically worked article, and the like can be achieved. Specifically, unlike a cutting process of cutting off extra portions of the raw material, the cold rolling can form a product by expanding a raw material thinner in outer diameter than the product, and accordingly, a waste of the material is small. Further, in the rolling process, a processing time is short, and a life of each tool is long, and so on, and accordingly, the productivity is increased as compared with the cutting process. Further, though it is necessary to exchange the tools (mandrel, forming roll) used in response to the article to be processed, stable processing accuracy can be obtained. Further, unlike the cutting process, fiber flows is not cut, and therefore, an occurrence of cracks, exfoliations, and the like on the rolling surfaces can be suppressed, and life extension of the product can be achieved.

It is preferred that the plastically worked article formed by the cold rolling use martensitic stainless steel.

It is preferred that an inclination of fiber flows of a rolling surface of the plastically worked article be 15° or less with respect to a tangential direction of the rolling surface except for a shoulder portion of the rolling surface and a vicinity of the shoulder portion. If the inclination of the fiber flow is as described above, the fiber flow flows in a form approximate to a shape of each of the rolling surfaces. Note that, when a curvature center of the rolling surface and a point at which a cross-section of the fiber flow is deposited are connected to each other by a straight line, the inclination of the fiber flow is an angle made by a line perpendicular to the straight line at an intersection of the straight line and the point and by a tangential line of the fiber flow at the point.

It is preferred that, as the plastically worked article, a blank be used, the blank being obtained by spheroidizing and annealing martensitic stainless steel containing 0.90 to 1.20 weight% of C, 1.0 weight% or less of Si, 1.0 weight% or less of Mn, 0.040 weight% or less of P, 0.030 weight% or less of S, 0.75 weight% or less of Ni, 16.0 to 18.0 weight% of Cr, and 0.75 weight% or less of Mo. It is preferred that the inclination of the fiber flow of the rolling surface of the plastically worked article be 15° or less with respect to the tangential direction of the rolling surface except for the shoulder portion of the rolling surface and the vicinity of the shoulder portion, and that surface hardness of at least the rolling surface be set at 55 to 64 HRC by quenching/tempering.

It is preferred that, as the plastically worked article, a blank be used, the blank being obtained by spheroidizing and annealing martensitic stainless steel containing 0.50 to 0.75 weight% of C, 0.5 weight% or less of Si, 1.0 weight% or less of Mn, 0.030 weight% or less of P, 0.030 weight% or less of S, 0.60 weight% or less of Ni, 11.5 to 13.5 weight% of Cr, and 0.50 weight% or less of Mo. It is preferred that the inclination of the fiber flow of the rolling surface of the plastically worked article be 15° or less with respect to the tangential direction of the rolling surface except for the shoulder portion of the rolling surface and the vicinity of the shoulder portion, and that surface hardness of at least the rolling surface be set at 55 to 64 HRC by quenching/tempering.

Here, the spheroidizing and annealing are heat treatment of spheroidizing carbides in steel and uniformly dispersing the carbides thereinto. Therefore, by performing the spheroidizing and annealing, plastic working and machining for the steel can be facilitated, or mechanical properties thereof can be improved. It is preferred that, in a carbide in the plastically worked article, (a+b)/2≤50 µm be established when a length of a major axis of the carbide is "a" and a length of a minor axis of the carbide is "b". Establishment of (a+b)/2≤30 µm is in particular preferred.

A first bearing device for a wheel of the present invention uses the double-row angular bearing. In the bearing device, the outer race, the inner race, and the rolling elements are integrated with one another by being press-fitted onto a hub wheel in an assembled state.

According to the first bearing device for a wheel of the present invention, the outer race, the inner race, and the rolling elements are integrated with one another by being press-fitted onto the hub wheel in the assembled state, whereby the step of press-fitting the hub wheel into the bearing can be omitted at a customer (an assembly factory of automobiles, and the like).

An end portion of the hub wheel may be caulked, and a pre-load may be imparted to an inner race of a roller bearing press-fitted to the hub wheel.

The outer race may be subjected to quenched steel cutting (hard turning) by a cutting process after heat treatment is performed after the cold rolling forming. The quenched steel cutting simply refers to cutting (such as lathing/turning), and the cutting is usually performed for a material in a raw state. Accordingly, the cutting here is referred to as the quenched steel cutting in order to clarify that the cutting is cutting for the material subjected to the heat treatment (quenching) . The cutting is performed after the rawmaterial is quenched, and hence deformation of the rawmaterial by the heat treatment can be removed in the cutting process. When such quenching is performed for the material, a tensile residual stress is prone to remain therein. If the material is left as it is, fatigue strength thereof is reduced. Therefore, if the surface is cut, a compressive residual stress can be imparted to a top surface portion thereof, whereby the fatigue strength is enhanced.

It is preferred that a fitting surface be formed in the radially outer surface of the outer race, and that the fitting surface be press-fitted into a knuckle.

In a second bearing device for a wheel of the present invention, extensions of load application lines of the rolling elements positionally shift with respect to a gap portion formed of the annular recessed portion of the outer race and a radially inner surface of a knuckle.

According to the second bearing device for a wheel of the present invention, loads from the rolling elements do not act on a region that constitutes a bottom wall of the annular recessed portion. Therefore, the strength and rigidity of the outer race can be ensured without thickening a thickness of the region that constitutes the bottom wall of the annular recessed portion. At this time, it is desirable that the extensions always positionally shift with respect to the same gap portion preferably in a range where external force (for example, bending moment force at the time when a vehicle turns) acts on the bearing. However, if the extensions positionally shift with respect to the gap portion at least in a no-load state, a certain effect can be exerted.

In a third bearing device for a wheel of the present invention, the inner race is structured so that a thickness thereof becomes substantially the same across an axial overall length thereof, and thickness-reduced portions formed by a non-cutting process are provided on radially inner portions of the inner race on axial both end portion sides.

According to the third bearing device for a wheel of the present invention, the thickness-reduced portions formed by the non-cutting process are provided in the inner race, whereby weight reduction of the inner race can be achieved.

There may be employed a bearing device for a wheel in which the inner race includes a pair of inner races and the pair of inner races are mounted in a state where touched surfaces thereof are touched against each other. There may be employed a bearing device for a wheel in which inner rolling surfaces opposed to the outer rolling surfaces of the outer race are formed in a radially outer surface of the hub wheel, a stepped portion is formed on an inboard side of the radially outer surface of the hub wheel, and the inner race, which has the inner rolling surfaces formed in an outer circumference thereof to be opposed to the outer rolling surfaces, is fitted to the stepped portion.

The hub wheel may be a hub wheel including: a shaft section; and a flange provided to protrude in a radially outer direction from an outboard-side end portion of the shaft section, in which a radially outer portion of an inboard-side end portion of the shaft section is caulked in the radially outer direction, and the radially outer portion thus caulked is engaged with at least one of the thickness-reduced portions of the inner race, whereby the inner race and the hub wheel are integrated with each other.

The bearing device for a wheel may be used for a drive wheel or for a driven wheel.

The present invention provides a first method of producing an outer race, the outer race having double-row outer rolling surfaces on a radially inner surface thereof, and having an annular recessed portion formed in an axial center portion of a radially outer surface thereof. The method includes: performing, by a first cold rolling process, a rough process of forming an roughly processed outer race having a circumferential groove formed in a radially outer surface thereof; and performing, by a second cold rolling process, a finish process including an annular recessed portion forming step of forming the annular recessed portion through reducing the circumferential groove of the roughly processed outer race.

According to the first method of producing an outer race of the present invention, the roughly processed outer race having the circumferential groove formed in the radially outer surface thereof can be formed by a first cold rolling process. The roughly processed outer race is formed into a shape similar to that of the conventional article formed by this type of cold rolling process. By the second cold rolling process, step of reducing the circumferential groove is performed. In such a way, an outer race can be formed, in which the extensions of the load application lines of the rolling elements positionally shift with respect to the gap portion formed of the annular recessed portion of the outer race and the radially inner surface of the knuckle.

The present invention provides a second method of producing an outer race, the outer race having double-row outer rolling surfaces on a radially inner surface thereof, and having an annular recessed portion formed in an axial center portion of a radially outer surface thereof. The method includes: performing, by a first cold rolling process, a rough process of forming an roughly processed outer race having a circumferential groove formed in a radially outer surface thereof; and performing, by a second cold rolling process, a finish process including an increasing step of increasing a shoulder height of the rolling surfaces.

According to the second method of producing an outer race of the present invention, the roughly processed outer race having the circumferential groove formed in the radially outer surface thereof can be formed by the first cold rolling process. The roughly processed outer race is formed into a shape similar to that of the conventional article formed by this type of cold rolling process. By the second cold rolling process, the increasing step of increasing the shoulder height of the rolling surfaces is performed. In such a way, an outer race can be formed, in which the rolling elements are less likely to protrude over the shoulder portion.

The present invention provides a third method of producing an outer race, the outer race having double-row outer rolling surfaces on a radially inner surface thereof, and having an annular recessed portion formed in an axial center portion of a radially outer surface thereof. The method includes: performing, by a first cold rolling process, a rough process of forming an roughly processed outer race having a circumferential groove formed in a radially outer surface thereof by using an outer race raw material formed of a tubular body having a crowning shape in which an axial center portion of a radially outer surface has a maximum radially-outer diameter; and performing, by a second cold rolling process, a finish process including an annular recessed portion forming step of forming the annular recessed portion through reducing the circumferential groove of the roughly processed outer race, and an increasing step of increasing a shoulder height of the rolling surfaces.

According to the third method of producing an outer race of the present invention, the roughly processed outer race having the circumferential groove formed in the radially outer surface thereof can be formed by the first cold rolling process. The roughly processed outer race is formed into a shape similar to that of the conventional article formed by this type of cold rolling process. By the second cold rolling process, there are performed: the annular recessed portion forming step of forming the annular recessed portion; and the increasing step of increasing the shoulder height of the rolling surfaces. In such a way, an outer race can be formed, in which the extensions of the load application lines of the rolling elements positionally shift with respect to the gap portion formed of the annular recessed portion of the outer race and the radially inner surface of the knuckle, and in which the rolling elements are less likely to protrude over the shoulder portions.

A tubular body having a crowning shape, in which a radially outer surface has a maximum radially-outer diameter on an axial center portion, can be adopted as the outer race raw material (blank).

The outer race may be an immersion-quenched article of SUJ2, or a high-frequency quenched article of the SUJ2, or a high-frequency quenched article of medium and high carbon steel containing 0.40 to 0.80 weight% of C Here, the immersion quenching is a method of forming the entire article into a hard structure in such a manner that the entire article is heated up to a required temperature (to a depth thereof) by an electric furnace and the like and is then rapidly cooled. The high-frequency quenching is a method of forming the entire article or a surface thereof into a hard structure in such a manner that the article is put between coils through which high-frequency currents flow, and the article is heated by Joule heat caused by Eddy current generated on surfaces of the coils and is then rapidly cooled.

After the first cold rolling step, an annealing step may be performed for the outer race raw material before the second cold rolling step. Here, the annealing is heat treatment performed in such a manner that, when a temperature of the raw material returns to the room temperature after the raw material is heated and soaked to an appropriate temperature, the raw material is cooled under such a condition where the raw material turns to a structure state approximate to equilibrium. The annealing includes various types such as softening annealing and stress removal annealing. The softening annealing is heat treatment of heating a steel product to a temperature close to an Ac1 transformation point for the purpose of lowering hardness of the steel product to a predetermined level. The softening annealing is optimum for pretreatment of the plastic working and the cutting process, and the stress removal annealing is optimum for removing a residual stress. The stress removal annealing is heat treatment of cooling a steel product to an appropriate temperature after heating and soaking the steel product to another appropriate temperature for the purpose of reducing an internal stress thereof without essentially changing a structure thereof.

According to the present invention, a method of producing an inner race for a bearing includes: forming a hollow bearing steel material into an inner-race-forming raw material by cold rolling; and forming a pair of inner races by cutting the inner-race-forming raw material at an axial center thereof.

According to the first method of producing an inner race for a bearing of the present invention, if the inner-race-forming raw material formed by the cold rolling is cut into halves at the axial center thereof, the pair of inner races can be formed. Therefore, the pair of inner races are individually formed by the cold rolling. If the inner races are formed by the cold rolling as described above, the enhancement of the yield and the productivity can be achieved, and in addition, the stable processing accuracy can be obtained.

The present invention provides a second method of producing an inner race for a bearing, the inner race having thickness-reduced portions on radially inner portions on axial both end portion sides thereof. The method includes: forming, by cold rolling, a hollow bearing steel material so that a thickness thereof becomes substantially the same across an axial overall length thereof; and forming, by a non-cutting process, the thickness-reduced portions on the radially inner portions on the axial both end portion sides.

According to the second method of producing an inner race for a bearing of the present invention, the cold rolling is used. Accordingly,the enhancement of the yield and the productivity can be achieved, and in addition, the stable processing accuracy can be obtained. In addition, the thickness of each of the inner races is set substantially the same across the axial overall length thereof, and the thickness-reduced portions formed by the non-cutting process can be formed stably and surely on the radially inner portions on the axial both end portion sides.

### Advantageous Effects of Invention

In the present invention, the outer race and the inner race are formed by the cold rolling process, and hence the enhancement of the yield and productivity of the product can be achieved, and cost reduction can be achieved. In addition, the outer race and the inner race can obtain the stable processing accuracy and the long life, and an enhancement of quality of the bearing can be achieved. Further, weight reduction of the outer race and the inner race can be achieved, and fuel consumption reduction of an automobile can be achieved. As described above, each of the outer race and the inner race is not formed by cutting out a cylindrical raw material, and hence a removal amount of the material in the cutting process is reduced, a waste of the material is reduced, and the cost reduction can be achieved.

The plastically worked article is made of the martensitic stainless steel, and hence the plastically worked article obtains high strength and high hardness by being quenched/tempered. Therefore, a high-quality product can be provided. Further, though corrosion resistance of the martensitic stainless steel is generally inferior to those of the other series of stainless steel, the martensitic stainless steel is excellent in corrosion resistance as compared with the SUJ2, and can sufficiently cope with the corrosion resistance required for the bearing device for an automobile wheel and the like.

The inclination of the fiber flow of the rolling surface of the plastically worked article is set so as to be 15° or less with respect to the tangential direction of each of the rolling surfaces, whereby the fiber flow flows in a form approximate to the shape of the rolling surface. In such a way, the occurrence of the cracks, the exfoliations, and the like on the rolling surface can be suppressed, and life extension of the product can be achieved.

In the case of using the blank obtained by spheroidizing and annealing the martensitic stainless steel containing 0.90 to 1.20 weight% of C, 1.0 weight% or less of Si, 1.0 weight% or less of Mn, 0.040 weight% or less of P, 0.030 weight% or less of S, 0.75 weight% or less of Ni, 16.0 to 18.0 weight% of Cr, and 0.75 weight% or less of Mo, or the blank obtained by performing the spheroidizing and annealing for the martensitic stainless steel containing 0.50 to 0.75 weight% of C, 0.5 weight% or less of Si, 1.0 weight% or less of Mn, 0.030 weight% or less of P, 0.030 weight% or less of S, 0.60 weight% or less of Ni, 11.5 to 13.5 weight% of Cr, and 0.50 weight% or less of Mo, then, by performing the above-mentioned spheroidizing and annealing, plastic working and machining for the blank are facilitated, or the mechanical properties thereof can be improved. Therefore, the enhancement of the productivity of the bearing can be further achieved. In addition, the hardness of the top surfaces of the rolling surfaces is set at 55 to 64 HRC by the quenching/tempering, whereby the rolling elements can stably roll for a long period of time.

If the plastically worked article is the outer race, the annular recessed portion is provided in the axial center portion of the radially outer surface, and accordingly, the plastic working becomes easy, and further, the weight reduction and the cost reduction can be achieved. Further, the relationship of (a+b)/2≤50 µm is defined when the length of the major axis of the carbide in the plastically worked article is "a" and the length of the minor axis thereof is "b", whereby a size of the carbide can be reduced while coarse carbides are suppressed. Therefore, even if stress concentration occurs, the occurrence of the cracks can be suppressed, and in addition, noise at the time of rolling can be reduced. Further, the processing accuracy can be prevented from being lowered, and a high-quality process can be performed. In particular, the relationship is set at (a+b)/2≤30 µm, whereby a higher-quality product can be provided.

In the first bearing device for a wheel according to the present invention, the step of press-fitting the hub wheel into the bearing at the customer can be omitted, reduction of the number of assembling process steps at the customer can be achieved, and an enhancement of assembling workability can be achieved. Further, the enhancement of the yield and productivity of at least the outer race can be achieved, and the cost reduction can be achieved. In addition, the outer race can obtain the stable processing accuracy and the high strength, and the quality improvement of the bearing can be achieved.

The expanded portion expanded to the radially inner side is provided in the axial center portion of the radially inner surface of the outer race, whereby the rolling surfaces can be formed in the radially inner surface, and the formation of the outer race can be facilitated. In addition, the thickness of the outer race can be maintained to be substantially constant along the axial direction thereof, and the weight reduction and the cost reduction can be achieved. Specifically, the circumferential recessed portion is provided in the axial center portion of the radially outer surface, whereby a thick region that is functionally useless can be omitted, and the weight reduction can be achieved.

If the inner race is formed by the cold rolling forming, or is made of a pressed plate, similarly to the outer race, an enhancement of yield and productivity of the inner race can be achieved, and cost reduction thereof can be achieved. In addition, the inner race can obtain stable processing accuracy and high strength, and a quality enhancement of the entire bearing can be achieved.

In the bearing device in which the end portion of the hub wheel is caulked and the pre-load is imparted to the inner race of the roller bearing press-fitted into the hub wheel, high-quality rotation can be obtained.

In the outer race subjected to the quenched steel cutting, the compressive residual force can be imparted to the top surface portion thereof, whereby the fatigue strength is enhanced, and a stable function can be exerted for a long period of time.

In the bearing device in which the fitting surface is formed in the radially outer surface of the outer race and is press-fitted into the knuckle, simplification of the assemble work can be further achieved.

In the second bearing device for a wheel according to the present invention, the strength and rigidity of the outer race can be ensured without thickening the thickness of the region that forms the annular recessedportion. Therefore, the weight reduction and miniaturization of the bearing device can be achieved.

In the third bearing device for a wheel according to the present invention, the thickness-reduced portions are formed in the radially inner portions on the axial both end portion sides. Therefore, the weight reduction of the inner race can be achieved, and the fuel consumption reduction can be achieved.

If the bearing device is a bearing device, in which the radially outer portion on the inboard-side end portion of the shaft section of the hub wheel is caulked in the radially outer direction, and such a caulked portion is engaged with the reduced portion, whereby the inner race and the hub wheel are integrated with each other, then the bearing can be stably mounted to the bearing. Therefore, a stable torque transmission function can be exerted for a long period of time.

In the first method of producing an outer race according to the present invention, the outer race can be formed, in which the extensions of the load application lines of the rolling elements positionally shift with respect to the gap portion formed of the annular recessed portion of the outer race and the radially inner surface of the knuckle. Therefore, an outer race excellent in strength and rigidity can be formed.

In the second method of producing an outer race according to the present invention, an outer race can be formed, in which the rolling elements are less likely to protrude over the shoulder portions. A bearing that uses the outer race can exert a stable function.

In the third method of producing an outer race according to the present invention, an outer race excellent in strength and rigidity, in which the rolling elements are less likely to protrude over the shoulder portions, can be formed. A bearing that uses the outer race can exert the stable function.

As described above, in the method of producing an outer race according to the present invention, the first cold rolling process and the second cold rolling process are performed, and the respective steps can be smoothly and effortlessly processed. Therefore, the respective cold rolling machines can perform processing with a less burden, and a useful service life of each thereof can be extended.

The first cold rolling step is similar to a conventional cold rolling step of forming this type of outer race, and the conventional and existing machine can be used for the cold rolling process of forming the roughly processed outer race, whereby the cost reduction can be achieved.

The tubular body having the crowning shape, in which the radially outer surface has the maximum radially-outer diameter in the axial center portion, can be adopted as the outer race raw material (blank). In the blank as described above, a thickness dimension thereof is large in the axial center portion, and such a reducing step of reducing the circumferential groove and the increasing step of increasing the shoulder height can be facilitated.

The outer race may be the immersion-quenched article of the SUJ2, or the high-frequency quenched article of the SUJ2, or the high-frequency quenched article of the medium and high carbon steel containing 0.40 to 0.80 weight% of C, and a material and heat treatment, which are generally used for this type of outer race, can be used. Therefore, the cost reduction can be achieved.

In the method of producing an outer race, in which, after the first cold rolling process step, the annealing step is performed before the second cold rolling process, an enhancement of processability can be achieved, and the high-quality product can be provided.

In the first method of producing an inner race for a bearing, the enhancement of the yield and the productivity can be achieved, and in addition, the stable processing accuracy can be obtained. Specifically, in the first method of producing an inner race for a bearing, a high-quality inner race can be stably provided at low cost. Further, in the second method of producing an inner race for a bearing, an inner race capable of achieving the weight reduction can be stably provided.

### Brief Description of Drawings

[FIG. 1] A sectional view of a double-row angular bearing, which illustrates the first embodiment of the present invention.
[FIG. 2A] An enlarged sectional view of an outer race of the double-row angular bearing.
[FIG. 2B] An enlarged sectional view of a range performing quenched steel cutting of the outer race of the double-row angular bearing.
[FIG. 3] A production process diagram of the outer race of the double-row angular bearing.
[FIG. 4] A schematic view of a cold rolling process machine that forms the outer race of the double-row angular bearing.
[FIG. 5A] A schematic sectional view of a rawmaterial, which illustrates fiber flows.
[FIG. 5B] A schematic sectional view of a product, which illustrates the fiber flow.
[FIG. 6] A schematic view illustrating the fiber flow of a main part of the outer race.
[FIG. 7] A schematic view of a carbide.
[FIG. 8A] A schematic sectional view of a rawmaterial, which illustrates fiber flows in a case of using the raw material having another shape.
[FIG. 8B] A schematic sectional view of a product, which illustrates the fiber flow in the case of using the raw material having the another shape.
[FIG. 9] A sectional view of a double-row angular bearing, which illustrates the second embodiment of the present invention.
[FIG. 10] A flowchart of an outer race production method of the present invention.
[FIG. 11A] A sectional view illustrating a production method of an outer race of the double-row angular bearing illustrated in FIG. 9, and illustrating a raw material.
[FIG. 11B] A sectional view illustrating the production method of the outer race of the double-row angular bearing illustrated in FIG. 9, which illustrates a roughly pressed the outer race.
[FIG. 11C] A sectional view illustrating the production method of the outer race of the double-row angular bearing illustrated in FIG. 9, which illustrates a product.
[FIG. 12A] A schematic view of a rolling process machine used in first cold rolling, which illustrates a rolling process machine used in the production method of the outer race.
[FIG. 12B] A schematic view of a rolling process machine used in second cold rolling, which illustrates a rolling process machine used in the production method of the outer race.
[FIG. 13] A flowchart of another outer race production method of the present invention.
[FIG. 14] A sectional view of a double-row angular bearing, which illustrates the third embodiment of the present invention.
[FIG. 15] A schematic view illustrating a raw material for forming an inner race of the double-row angular bearing illustrated in FIG. 14.
[FIG. 16A] A schematic sectional view of a first inner-race forming raw material, which illustrates an inner-race-forming raw material for forming an inner race of the double-row angular bearing illustrated in FIG. 14.
[FIG. 16B] A schematic sectional view of a second inner-race-forming raw material, which illustrates an inner-race-forming raw material for forming the inner race of the double-row angular bearing illustrated in FIG. 14.
[FIG. 17] A sectional view of a range of performing quenched steel cutting of the inner race of the double-row angular bearing illustrated in FIG. 14.
[FIG. 18] A sectional view of a double-row angular bearing, which illustrates the fourth embodiment of the present invention.
[FIG. 19] A sectional view of a double-row angular bearing, which illustrates the fifth embodiment of the present invention.
[FIG. 20] A sectional view of main parts of a bearing device for a wheel, which illustrates the sixth embodiment of the present invention.
[FIG. 21] A sectional view of a state where the bearing of the bearing device for a wheel, which is illustrated in FIG. 20, is press-fitted into a knuckle.
[FIG. 22] A sectional view of a bearing device for a wheel, which uses the double-row angular bearing illustrated in FIG. 19.
[FIG. 23] A sectional view of a bearing device for a wheel, which uses the double-row angular bearing illustrated in FIG. 14.
[FIG. 24] A sectional view of a bearing device for a wheel, which uses the double-row angular bearing illustrated in FIG. 1.
[FIG. 25] A sectional view of a bearing device for a wheel, which illustrates the seventh embodiment of the present invention.
[FIG. 26] A sectional view of a bearing device for a wheel, which illustrates the eighth embodiment of the present invention.
[FIG. 27] A sectional view of a bearing device for a wheel, which illustrates the ninth embodiment of the present invention.
[FIG. 28] A sectional view of a bearing device for a wheel, which illustrates the tenth embodiment of the present invention.
[FIG. 29] A sectional view of a bearing device for a wheel, which illustrates the eleventh embodiment of the present invention.
[FIG. 30] A sectional view of a conventional bearing device for a wheel.
[FIG. 31] A sectional view of a double-row angular bearing used in the bearing device for a wheel, which is illustrated in FIG. 30.
[FIG. 32] A sectional view illustrating a production method of an outer race of the double-row angular bearing.
[FIG. 33A] A schematic sectional view illustrating fiber flows of a raw material of the outer race of the double-row angular bearing.
[FIG. 33B] A schematic sectional view illustrating the fiber flow of a product of the outer race of the double-row angular bearing.
[FIG. 34] A sectional view illustrating a production method of an inner race of the conventional double-row angular bearing.
[FIG. 35] A schematic sectional view illustrating fiber flows of a raw material of the inner race of the conventional double-row angular bearing.
[FIG. 36] A sectional view of a double-row angular bearing similar to the double-row angular bearing illustrated in FIG. 31.
[FIG. 37] A sectional view of another conventional bearing.
[FIG. 38A] A sectional view of a raw material, which illustrates a production method of an outer race of the conventional bearing.
[FIG. 38B] A sectional view of a product, which illustrates the production method of the outer race of the conventional bearing.
[FIG. 39] A schematic view of a production apparatus used for producing the outer race of the conventional bearing.

### Reference Signs List

- 1: hub wheel
- 2: bearing
- 3: constant velocity universal joint
- 20: cylindrical section
- 20A: solid shaft section
- 24: inner race
- 24A, 24B: inner race
- 25: outer race
- 26, 27: outer rolling surface
- 28, 29: inner rolling surface
- 30: rolling element
- 34: raw material
- 36A: roughly processed outer race
- 50: radially outer surface
- 50a: fitting surface
- 51: annular recessed portion
- 53: circumferentially protruding portion (expanded portion)
- 71: shoulder portion
- 73: inner-race-forming raw material
- 100: thickness-reduced portion
- K: gap portion
- N: knuckle

### Description of Embodiments

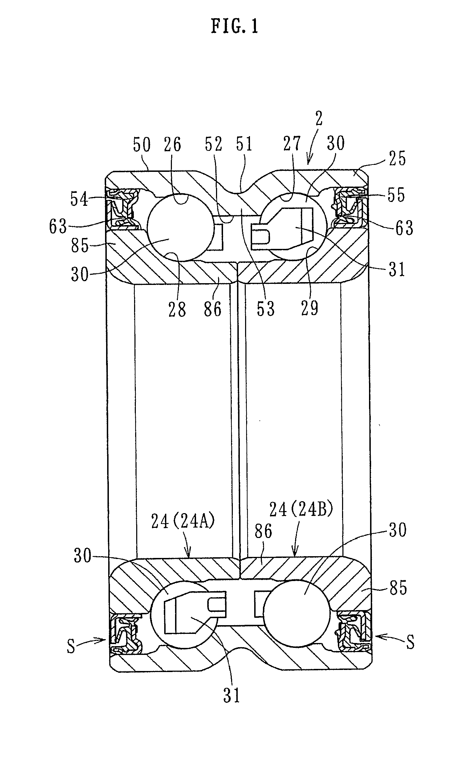

Hereinafter, embodiments of the present invention are described with reference to FIG. 1 to FIG. 29. A double-row angular bearing of a first embodiment is illustrated in FIG. 1. The bearing includes: an outer race 25 having double-row outer rolling surfaces 26 and 27 formed in an inner circumference thereof; a pair of inner races 24A and 24B having inner rolling surfaces 28 and 29 formed in outer circumferences thereof, which are opposed to the outer rolling surfaces 26 and 27 of the outer race 25; and a double-row rolling elements 30 rotatably housed between the outer rolling surfaces 26 and 27 of the outer race 25 and the inner rolling surfaces 28 and 29 of the inner races 24A and 24B. The rolling elements 30 are retained by cages 31 provided between the outer race 25 and the inner races 24A and 24B. Seal members S are inserted into both opening portions of a roller bearing (opening portions between the outer race 25 and the inner races 24A and 24B).

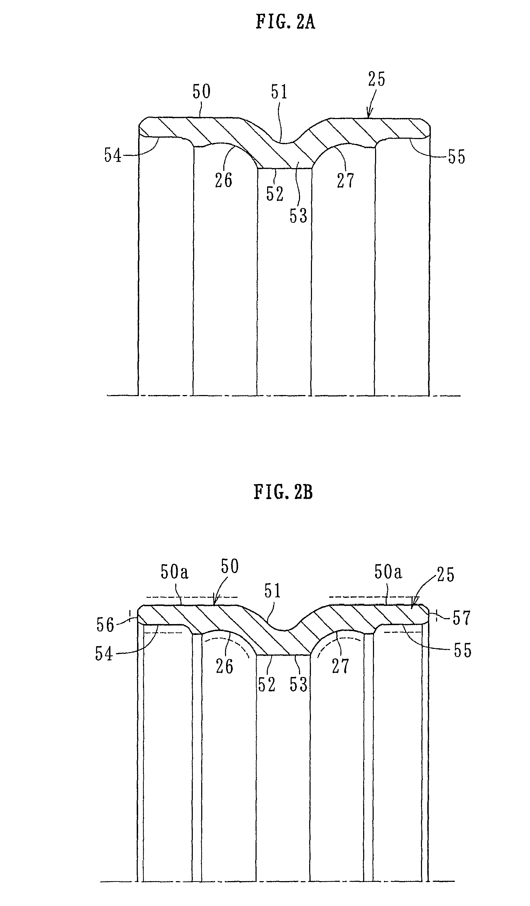

As illustrated in FIG. 2, in the outer race 25, an annular recessed portion 51 is formed at an axial center portion of a radially outer surface 50 thereof, and at an axial center portion of a radially inner surface 52 thereof, a circumferentially protruding portion (expanded portion) 53 is provided so as to correspond to the annular recessed portion 51. The outer rolling surfaces 26 and 27 are formed on both sides of the circumferentially protruding portion 53, and further, seal grooves 54 and 55 are formed on outsides of the outer rolling surfaces 26 and 27.

One inner race 24A, and the other inner race 24B may be formed of a common part. Note that, the bearing 2 is used for a bearing device for a wheel, and hence the one inner race 24A is referred to as an outboard-side inner race 24, and the other inner race 24B is referred to as an inboard-side inner race 24. A side of the bearing, which is located on an outside of a vehicle in a state where the bearing is assembled into the vehicle, is referred to as an outboard side (left side in FIG. 1), and a side of the bearing, which is located on a center side of the vehicle in the above-mentioned state, is referred to as an inboard side (right side in FIG. 1). As illustrated in FIG. 1, each of the inner races 24 (24A, 24B) is formed of a short cylindrical body having a thick portion 85 and a thin portion 86, and the rolling surface 28 (29) is formed in a radially outer surface between the thick portion 85 and the thin portion 86. A radially outer surface of the thick portion 85 serves as a seal mounting surface 63.

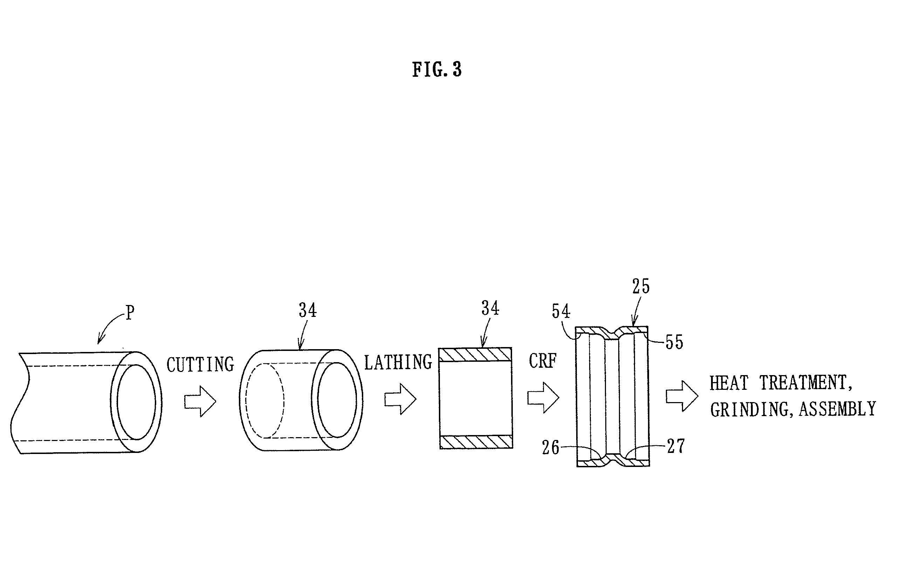

Next, a production method of the outer race 25 of the roller bearing is described. In the outer race production method, as illustrated in FIG. 3, a long pipe material P is cut/lathed to a predetermined dimension, and a short raw material 34 is formed. Thereafter, a cold rolling process is performed for the raw material 34. The cold rolling is a processing method of rolling a raw material (blank) while rotating the raw material kept in a cold state (at ordinary temperature) without applying heat thereto. Specifically, the cold rolling is a processing method of forming a work (finished article after processing) in such a manner that the blank (raw material) in which inner and outer diameters are smaller than those of the work and the inner and outer diameters are basically straight is sandwiched between two jigs (for radially inner and outer surfaces) designed into a shape to which the blank is desired to be processed, and the blank is then rolled while being rotated.

As the raw material 34, a raw material can be used, which is obtained by performing spheroidizing and annealing for martensitic stainless steel A containing 0.90 to 1.20 weight% of C, 1.0 weight% or less of Si, 1.0 weight% or less of Mn, 0.040 weight% or less of P, 0.030 weight% or less of S, 0.75 weight% or less of Ni, 16.0 to 18.0 weight% of Cr, and 0.75 weight% or less of Mo. Here, the spheroidizing and annealing are heat treatment of spheroidizing carbides in steel and uniformly dispersing the carbides thereinto. Therefore, by performing the spheroidizing and annealing, plastic working and machining for the steel can be facilitated, or mechanical properties thereof can be improved.

In this case, a purpose of setting the amount of Si at 1.0 weight% or less is to achieve an enhancement of processability for the steel in the cold rolling. Further, a purpose of setting the amount of C at 0.90 to 1.20 weight% is to ensure hardness of the quenched/tempered steel, which is required for the outer race of the bearing.

Further, the raw material 34 may be a raw material obtained by performing the spheroidizing and annealing for martensitic stainless steel B containing 0.50 to 0.75 weight% of C, 0.5 weight% or less of Si, 1.0 weight% or less of Mn, 0.030 weight% or less of P, 0.030 weight% or less of S, 0.60 weight% or less of Ni, 11.5 to 13.5 weight% of Cr, and 0.50 weight% or less of Mo.

Also in this case, a purpose of setting the amount of Si at 0.5 weight% or less is to achieve an enhancement of processability for the steel in the cold rolling. Further, a purpose of setting the amount of C at 0.50 to 0.75 weight% is to ensure hardness of the quenched/tempered steel, which is required for the outer race of the bearing. Note that, in the case of the martensitic stainless steel B, the carbide becomes smaller than in the martensitic stainless steel A.

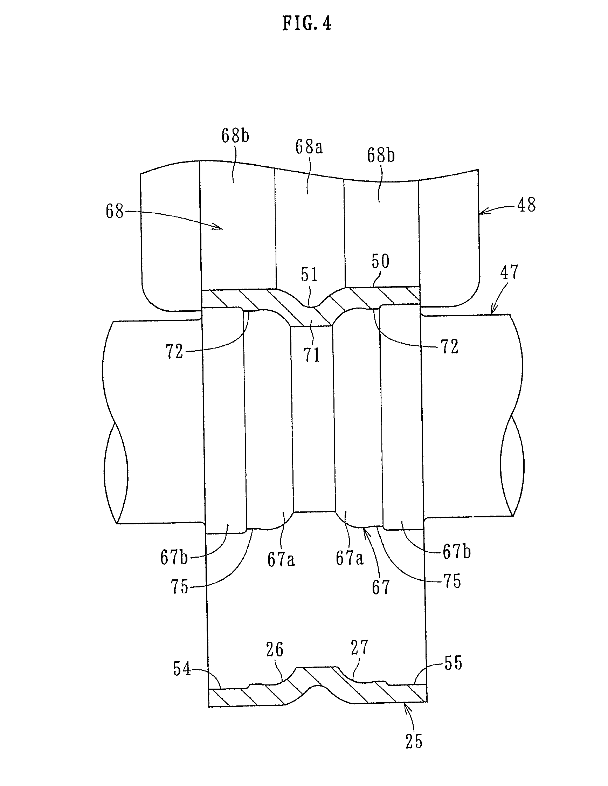

In a cold rolling step, the cold rolling process is performed by a rolling machine as illustrated in FIG. 4. The rolling machine includes: a mandrel 47 for a radially inner surface; and a forming roll 48 for a radially outer surface. In an outer peripheral surface of the mandrel 47, an outer race radially inner surface forming section 67 that forms the radially inner surface of the outer race 25 is formed, and in a radially outer surface of the forming roll 48, an outer race radially outer surface forming section 68 that forms the radially outer surface of the outer race 25 is formed.

The outer race radially inner surface forming section 67 includes rolling surface forming portions 67a and 67a, and seal groove forming portions 67b and 67b. Further, the outer race radially outer surface forming section 68 includes an annular recessed portion forming portion 68a, and radially outer surface forming portions 68b and 68b.

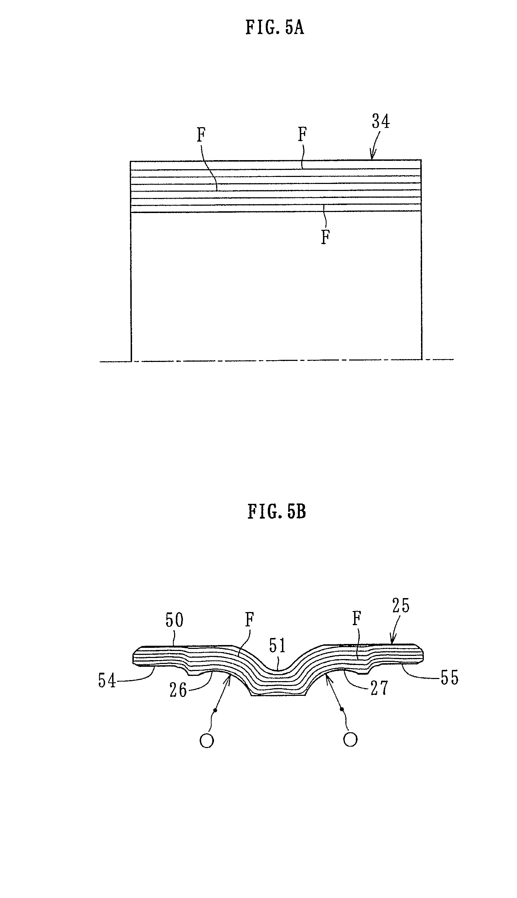

In this case, in a state where the cylindrical raw material 34 illustrated in FIG. 5A is externally fitted to the mandrel 47, and where the raw material 34 is sandwiched by the mandrel 47 and the forming roll 48, the forming roll 48 is rotated about an axial center thereof. In such a way, the outer race 25 can be formed.

Incidentally, fiber flows F in the raw material 34 are flows along an axial direction thereof as illustrated in FIG. 5A. Therefore, the fiber flows F of the outer race 25 formed by the cold rolling are flows as illustrated in FIG. 5B.

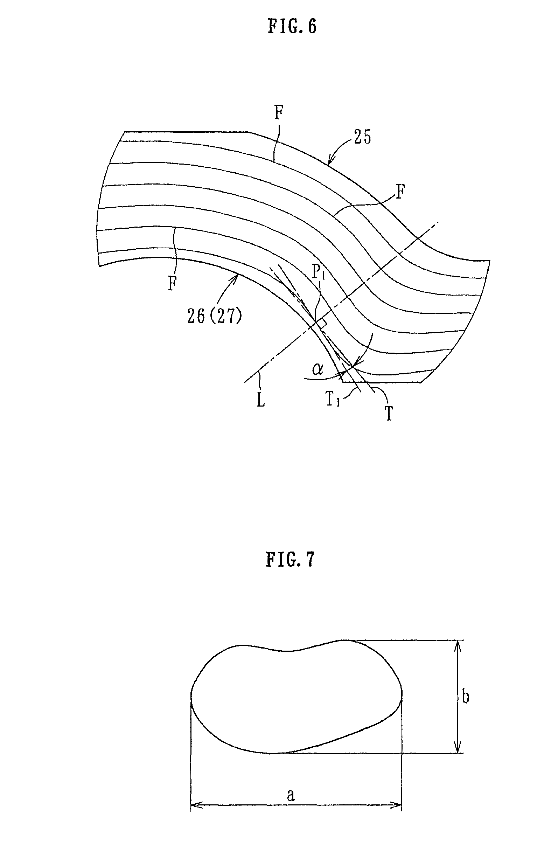

In this case, as illustrated in FIG. 6, an inclination of each of the fiber flows of the rolling surface of such a plastically worked article is 15° or less with respect to a tangential direction of the rolling surface 26 (27) except for a shoulder portion of the rolling surface 26 (27) and the vicinity thereof. Specifically, when a curvature center O (refer to FIG. 5B) of the rolling surface 26 (27) and a point P1 at which a cross-section of the fiber flow F is deposited are connected to each other by a straight line L, an angle α made by a line T orthogonal to the straight line L at an intersection of the straight line L and the point P1 and by a tangential line T1 of the fiber flow F at the point P1 is 15° or less.

Further, in the carbides in the outer race 25 as the plastically worked article, (a+b)/2≤50 µm is established when a length of a major axis thereof is "a" and a length of a minor axis thereof is "b". As illustrated in FIG. 7, the length of the major axis is a maximum length in a longitudinal direction, and the length of the minor axis is a maximum length in a lateral direction (direction orthogonal to the longitudinal direction).

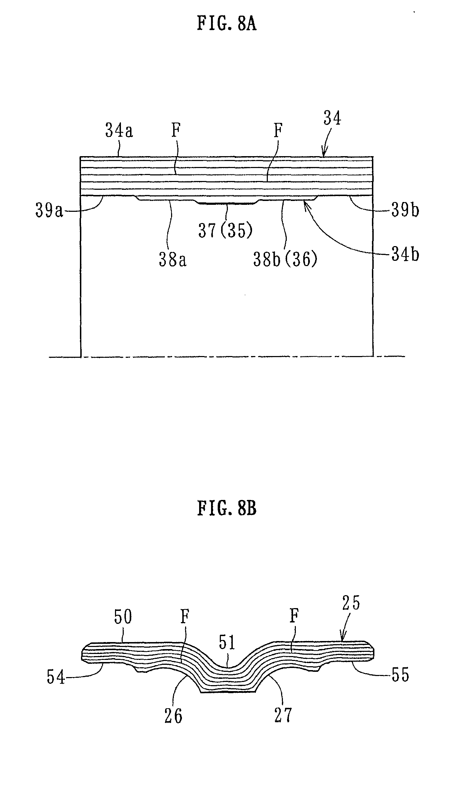

The raw material 34 may include a shape as illustrated in FIG. 8A. Specifically, the raw material 34 has a radially outer surface 34a that is a cylindrical surface, and meanwhile, has a radially inner surface 34b including: a smaller-diameter portion 37 in an axial center portion thereof; middle-diameter portions 38a and 38b provided on both sides of the smaller-diameter portion 37; and larger-diameter portions 39a and 39b provided on axial end portions thereof.

If the raw material 34 is used, the middle-diameter portions 38a and 38b form the rolling surfaces 26 and 27, and the larger-diameter portions 39a and 39b form the seal grooves 54 and 55. Therefore, amounts of deformation in the respective regions can be reduced, and the enhancement of the processability can be achieved. Further, fiber flows F in the raw material 34 are flows along the axial direction as illustrated in FIG. 8A. Therefore, the fiber flows F of the outer race 25 formed by the cold rolling are flows as illustrated in FIG. 8B.

Further, a first circumferentially protruding portion 35 is formed of the smaller-diameter portion 37, and second circumferentially protruding portions 36 are formed of the middle-diameter portions 38a and 38b. The first circumferentially protruding portion 35 forms a shoulder portion 71 between the rolling surfaces 26 and 27, and the second circumferentially protruding portions 36 form counterbores 72 (shoulder portions formed in the seal groove 54 and 55-sides in the respective rolling surfaces 26 and 27).

As described above, if the blank 34 includes, on the radially inner surface thereof, the first circumferentially protruding portion 35 that forms the shoulder portion 71 between the rolling surfaces, then a satisfaction degree of such outer race shoulder portions (raceway surface shoulder portions) is improved, and an occurrence of microcracks can be suppressed. In such a way, even in the case where the bearing inclines by a moment load from a tire at the time when the vehicle turns, and the rolling elements 30 pass near the shoulder portion 71, a rolling life of the bearing is not adversely affected thereby because there are no microcracks. In addition, no individual differences occur in circumstances where the rolling elements 30 protrude over the shoulder portion 71, which may be caused by insufficiency of the shoulder portion 71.

At the time when the rolling is started, steps of the counterbores 72 enter recessed portions (counterbore forming portions 75 and 75 (refer to FIG. 4)) of the mandrel 47, whereby the raw material 34 can be located just in a center in a width-direction of a space between the forming roll 48 and the mandrel 47, and a behavior of the raw material 34 at the beginning of the rolling is stabilized. In such a way, the rolling is performed uniformly right and left, and the satisfaction degree also becomes uniform right and left. In other words, spots where the cracks are prone to occur can be satisfied. A product thus formed will has quality.

In addition, work conventionally performed, which is: "in order to solve the insufficiency, the shoulder portions of the rolling surfaces and the like are formed after increasing the thickness of the blank, and are thereafter lathed", is eliminated, whereby the enhancement of the productivity and the cost reduction can be achieved.

After the rolling process, the raw material 34 is quenched/tempered by a heating furnace, high-frequency heating, and the like, and the entire or surface thereof is hardened. Thereafter, the raw material 34 is subjected to a cutting process. In this case, as illustrated by the broken lines of FIG. 2B, cutting is performed for the seal grooves 54 and 55 located on the axial end portions of the radially inner surface, the rolling surfaces 26 and 27, both end surfaces 56 and 57 of the outer race, and the radially outer surface 50 thereof. Therefore, such cutting can be referred to as quenched steel cutting. Specifically, the quenched steel cutting simply means the cutting, and the cutting is usually performed for the material in a raw state, and accordingly, the cutting here is referred to as the quenched steel cutting in order to clarify that material is cut after the material is subjected to the heat treatment (quenched/tempered). The cutting is performed after the raw material is quenched/tempered, and hence deformation of the raw material by the heat treatment can be removed in the cutting process. When such quenching/tempering is performed for the material, a tensile residual stress is prone to remain therein, and if the material is left as it is, fatigue strength thereof is reduced. Therefore, if the surface is cut, a compressive residual stress can be imparted to a top surface portion thereof, whereby the fatigue strength is enhanced. In this case, hardness of bottom surfaces of at least the rolling surfaces 26 and 27 is set at 55 to 64 HRC. After the cutting process, a grinding process is performed for the seal grooves 54 and 55, the rolling surfaces 26 and 27, and the radially outer surface 50, and thereafter, the outer race is assembled to the bearing. At the time of the grinding process, both end surfaces 56 and 57 may also be ground. Further, for the processing step, the conventional step of cutting/lathing the material in a raw state after the rolling process may be used in place of the quenched steel cutting after the heat treatment.

In the double-row angular bearing of the present invention, the outer race 25 is formed by the cold rolling process. Accordingly, an enhancement of yield and productivity of the product can be achieved, and the cost reduction can be achieved. In addition, the outer race 25 can obtain stable processing accuracy and a long life, and an enhancement of quality of the bearing can be achieved. Further, weight reduction of the outer race 25 can be achieved, and fuel consumption reduction of the automobile can be achieved. As described above, the outer race 25 is not formed by cutting out a cylindrical rawmaterial, and hence a removal amount of the material in the cutting process is reduced, a waste of the material is reduced, and the cost reduction can be achieved.

The plastically worked article is made of the martensitic stainless steel, and hence the plastically worked article obtains high strength and high hardness by being quenched/tempered. Therefore, a high-quality product can be provided. Further, though corrosion resistance of the martensitic stainless steel is generally inferior to those of the other series of stainless steel, the martensitic stainless steel is excellent in corrosion resistance as compared with the SUJ2, and can sufficiently cope with the corrosion resistance required for the bearing device for an automobile wheel, and the like.

The inclination of the fiber f low F of the rolling surface of the plastically worked article is set so as to be 15° or less with respect to the tangential direction of the rolling surface 26 or 27, whereby the fiber flow F flows in a form approximate to the shape of the rolling surface. In such a way, the occurrence of the cracks, exfoliations, and the like on the rolling surfaces 26 and 27 can be suppressed, and life extension of the product can be achieved.

In the case of using the blank obtained by spheroidizing and annealing the martensitic stainless steel, by performing these spheroidizing and annealing, plastic working and machining for the blank can be facilitated, or the mechanical properties thereof can be improved. Therefore, the enhancement of the productivity of the bearing can be further achieved. In addition, the hardness of the top surfaces of the rolling surfaces is set at 55 to 64 HRC by the quenching/tempering, whereby the rolling elements can stably roll for a long period of time.

Incidentally, if large carbides (eutectic carbides) are present in the outer race, the cracks become prone to occur therein when the stress is concentrated to the carbides. The relationship of (a+b)/2≤50 µm is defined when the length of the major axis of the carbide is "a" and the length of the minor axis thereof is "b", whereby a size of the carbide can be reduced. Therefore, even if such stress concentration occurs, the occurrence of the cracks can be suppressed, and in addition, noise at the time of rolling can be reduced. Further, the processing accuracy can be prevented from being lowered, and a high-quality process can be performed. In particular, the relationship is set at (a+b)/2≤30 µm, whereby a higher-quality product can be provided.

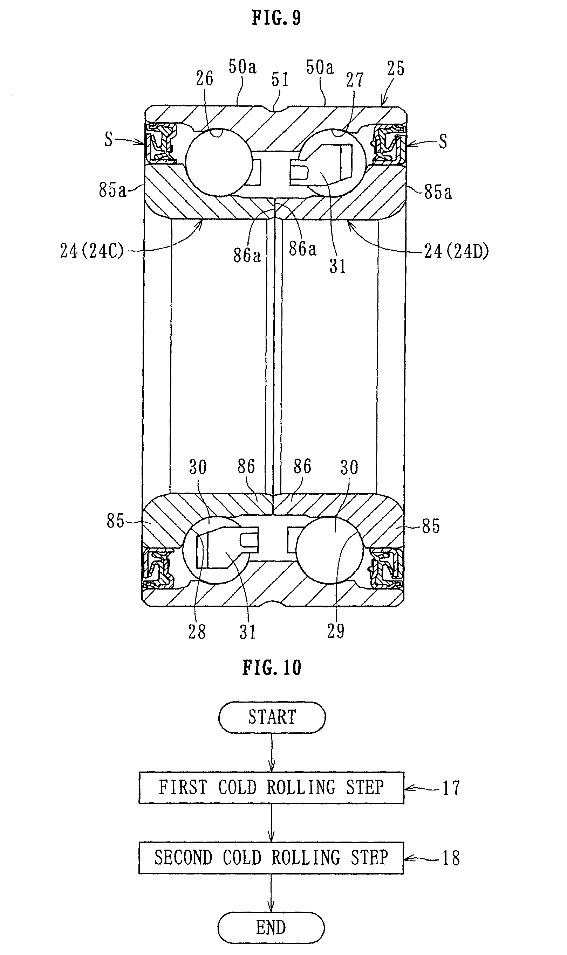

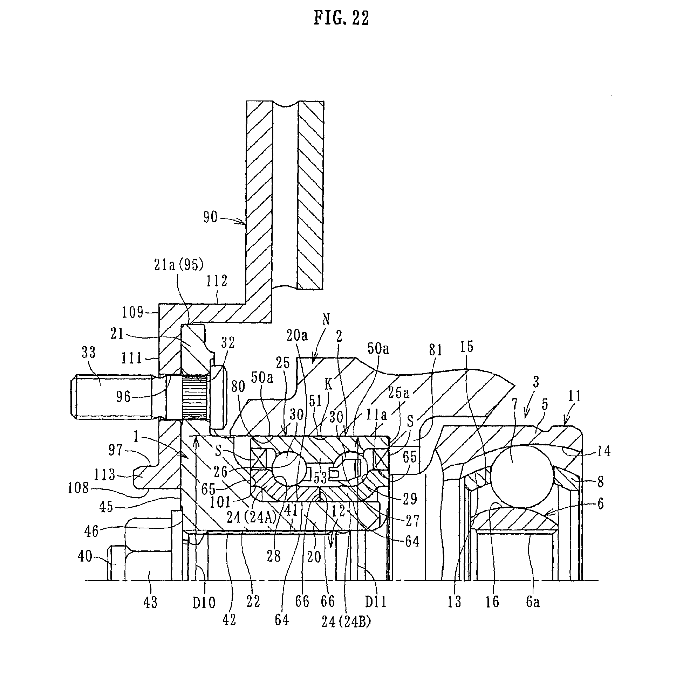

Next, FIG. 9 illustrates a second embodiment. In this case, the annular recessed portion 51 of the outer race 25 is smaller as compared with that of the double-row angular bearing illustrated in FIG. 1. As described later, in such a way, in the case of using the double-row angular bearing for the bearing device for a wheel, the load application lines L1 and L2 of the rolling elements do not intersect each other in a gap portion K formed when the bearing device for a wheel is press-fitted into a knuckle N (refer to FIG. 22 and the like).

A production method of an outer race of the double-row angular bearing illustrated in FIG. 9 is described. As illustrated in FIG. 10, such an outer race production method includes: a first cold rolling step 17; and a second cold rolling step 18. Here, the cold rolling is a processing method of rolling a raw material (blank) while rotating the raw material kept in a cold state (at ordinary temperature) without applying heat thereto. Specifically, the cold rolling is a processing method of forming a work (finished article subjected to the process) in such a manner that the blank (raw material) in which inner and outer diameters are smaller than those of the work and the inner and outer diameters are basically straight is sandwiched between two jigs (for radially inner and outer surfaces) designed into a shape to which the blank is desired to be processed, and the blank is then rolled while being rotated.

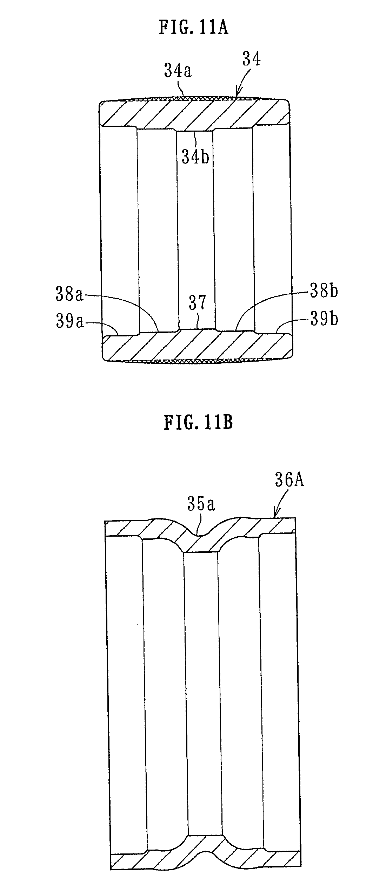

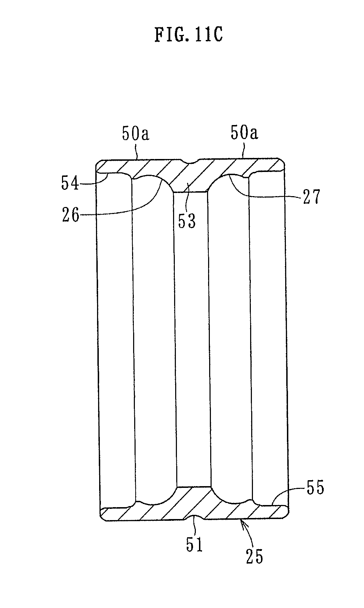

The first cold rolling step 17 is a step of performing a rough process of forming a roughly processed outer race 36A having a circumferential groove 35a in a radially outer surface thereof as illustrated in FIG. 11B. Further, the second cold rolling step 18 is a step of performing a finish process including an annular recessed portion forming step of forming the annular recessed portion 51 through reducing the circumferential groove 35a of the roughly processed outer race 36A as illustrated in FIG. 11C.

As illustrated in FIG. 11A, a blank (outer race raw material) 34 in this case is formed of a short cylindrical body having a crowning shape in which an axial center portion of a radially outer surface 34a has a maximum radially-outer diameter. Further, a radially inner surface 34b of the blank 34 includes: a smaller-diameter portion 37 in the axial center portion; middle-diameter portions 38a and 38b provided on both sides of the smaller-diameter portion 37; and larger-diameter portions 39a and 39b provided on opening portion sides thereof.

Any of the following cases is acceptable here. In a first case, the raw material 34 of the outer race is the SUJ2, and the heat treatment after the cold rolling step is immersion quenching. In a second case, the raw material 34 is the SUJ2, and the heat treatment is high-frequency quenching. In a third case, the raw material 34 is medium and high carbon steel containing 0.40 to 0.80 weight% of C, and the heat treatment is high-frequency quenching. Here, the immersion quenching is a method of forming the entire article into a hard structure in such a manner that the entire article is heated up to a required temperature (to a depth thereof) by an electric furnace and the like and is then rapidly cooled. The high-frequency quenching is a method of forming the entire article or a surface thereof into a hard structure in such a manner that the article is put between coils through which high-frequency current flows, and the article is heated by Joule heat caused following Eddy current generated on surfaces of the coils and is then rapidly cooled.

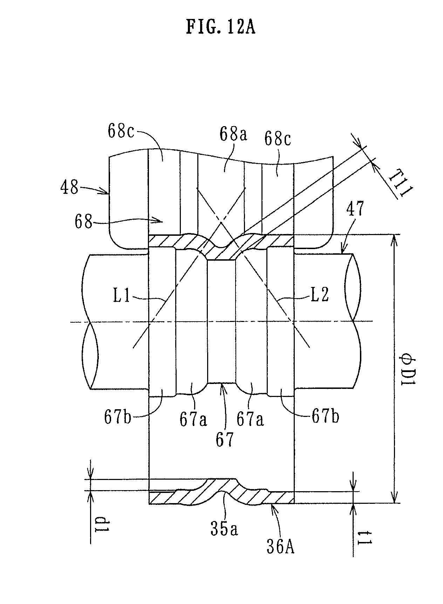

In the first cold rolling step 17, a cold rolling process is performed by a rolling machine as illustrated in FIG. 12A. The rolling machine includes: a mandrel 47 for a radially inner surface; and a forming roll 48 for a radially outer surface. In an outer peripheral surface of the mandrel 47, an outer race radially inner surface forming section 67 that forms the radially inner surface of the outer race 25 is formed, and in a radially outer surface of the forming roll 48, an outer race radially outer surface forming section 68 that forms the radially outer surface of the outer race 25 is formed.

The outer race radially inner surface forming section 67 includes rolling surface forming portions 67a and 67a, and seal groove forming portions 67b and 67b. Further, the outer race radially outer surface forming section 68 includes an annular recessed portion forming portion 68a, and seal mounting portion radially outer surface forming portions 68c and 68c.

In this case, in a state where the raw material 34 is externally fitted to the mandrel 47, and where the raw material 34 is sandwiched by the mandrel 47 and the forming roll 48, the forming roll 48 is rotated about an axial center thereof. In such a way, the roughly processed outer race 36A as illustrated in FIG. 11B can be formed.

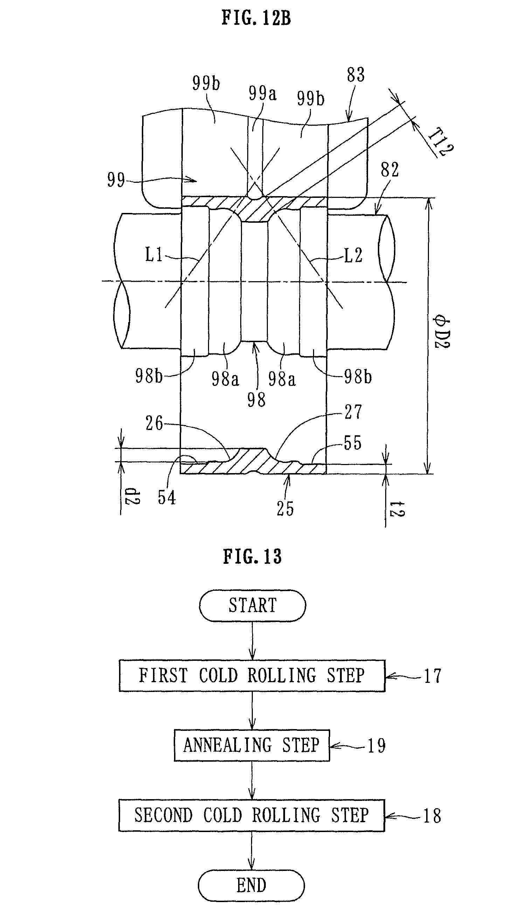

In the second cold rolling step 18, a cold rolling process is performed by a rolling machine as illustrated in FIG. 12B. The rolling machine includes: a mandrel 82 for a radially inner surface; and a forming roll 83 for a radially outer surface. In an outer peripheral surface of the mandrel 82, an outer race radially inner surface forming section 98 that forms the radially inner surface of the outer race 25 is formed, and on a radially outer surface of the forming roll 83, an outer race radially outer surface forming section 99 that forms the radially outer surface of the outer race 25 is formed.

The outer race radially inner surface forming section 98 includes rolling surface forming portions 98a and 98a, and seal groove forming portions 98b and 98b. Further, the outer race radially outer surface forming section 99 includes an annular recessed portion forming portion 99a, and fitting surface forming portions 99b and 99b.

In this case, in a state where the raw material (roughly processed outer race) 36A is externally fitted to the mandrel 82, and where the roughly processed outer race 36A is sandwiched by the mandrel 82 and the forming roll 83, the forming roll 83 is rotated about an axial center thereof. In such a way, the outer race 25 as illustrated in FIG. 11C can be formed.

As described above, in the outer race production method, the raw material 34 illustrated in FIG. 11A is first formed, and thereafter, the first cold rolling step 17 is performed as illustrated in FIG. 10, whereby the roughly processed outer race 36A as illustrated in FIG. 11B is formed. Thereafter, the second cold rolling step 18 is performed, whereby the outer race 25 as illustrated in FIG. 11C is formed.

Specifically, the middle-diameter portions 38a and 38b of the raw material 34 serve as the rolling surfaces 26 and 27, and the larger-diameter portions 39a and 39b of the raw material 34 serve as the seal grooves 54 and 55. Further, the circumferential groove 35a of the roughly processed outer race 36A is formed in the axial center portion of the radially outer surface of the raw material 34, and the circumferential groove 35a serves as the annular recessed portion 51 of the outer race 25. Further, a relationship t1 > t2 is established in the case where a thickness of opening portions of the roughly processed outer race 36A is set to t1, and where a thickness of opening portions of the outer race 25 is set to t2. A relationship d1 < d2 is established in the case where a shoulder height of the roughly processed outer race 36A is set to d1, and where a shoulder height of the outer race 25 is set to d2. A relationship D1 < D2 is established in the case where an outer diameter dimension of the roughly processed outer race 36A is set to D1, and where an outer diameter dimension of the outer race 25 is set to D2. A relationship T11 < T12 is established in the case where a thickness of the circumferential groove of the roughly processed outer race 36A in a direction of the load application lines L1 and L2 is set to T11, and where a thickness of the annular recessed portion of the outer race 25 in the direction of the load application lines L1 and L2 is set to T12. Specifically, in the case of comparing the roughly processed outer race 36A and the outer race 25 with each other, the thickness T12 of the annular recessed portion 51 of the outer race 25 in the direction of the load application lines L1 and L2 is larger than the thickness T11 of the circumferential groove 35a of the roughly processed outer race 36A in the direction of the load application lines L1 and L2, and a thickness of the other regions of the outer race 25 is smaller than a thickness of the other regions of the roughly processed outer race 36A. Further, the shoulder height d2 of the outer race 25 is larger than the shoulder height d1 of the roughly processed outer race 36A.

As described above, in the second cold rolling step 18, the circumferential groove 35a of the roughly processed outer race 36A is reduced, whereby the finish process is performed, which includes: the annular recessed portion forming step of forming the annular recessed portion 51; and an increasing step of increasing the shoulder height of the rolling surfaces 26 and 27.

Therefore, in the roughly processed outer race 36A, the load application lines L1 and L2 of the rolling elements intersect each other on a bottom surface of the circumferential groove 35a, and meanwhile, in the outer race 25, an intersection of the load application lines L1 and L2 of the rolling elements on the radially outer surface is located outside the annular recessed portion 51. Therefore, as illustrated in FIG. 22, the load application lines L1 and L2 of the rolling elements do not intersect each other in the gap portion K formed upon press-fitting, into the knuckle K, the bearing in which the outer race 25 is used.

Even in the production method of the outer race 25, which is illustrated in FIG. 11 A to C and FIG. 12, the outer race 25 is formed by the cold rolling. Accordingly, the enhancement of the yield and productivity of the product can be achieved, and the cost reduction can be achieved. In addition, the outer race 25 can obtain the stable processing accuracy and high strength, and the enhancement of the quality of the bearing 2 can be achieved. Further, the weight reduction of the outer race 25 can be achieved, and the fuel consumption reduction can be achieved.

Further, the strength and rigidity of the outer race 25 can be ensured without thickening a thickness of a region that forms a bottom wall of the annular recessed portion 51. Therefore, the weight reduction and miniaturization of the bearing device can be achieved.

In the above-mentioned outer race production method, the outer race 25 can be formed, in which extensions L1 and L2 of the load application lines of the rolling elements 30 positionally shift with respect to the gap portion K formed of the annular recessed portion 51 and a radially inner surface 80 of the knuckle N . Therefore, an outer race excellent in strength and rigidity can be formed.

Further, in the outer race production method, the first cold rolling step 17 and the second cold rolling step 18 are performed, and the respective steps can be smoothly and effortlessly processed. Therefore, the respective cold rolling machines can perform machining with a less burden, and a useful service life of the outer race can be extended.

The first cold rolling step 17 is similar to a conventional cold rolling step of forming this type of outer race, and the conventional and existing machine can be used for the cold rolling process of forming the roughly processed outer race 36A, whereby the cost reduction can be achieved. In addition, in the second cold rolling step 18, the increasing step of increasing the shoulder height of the rolling surfaces 26 and 27 is performed, and accordingly, the rolling elements 30 can be prevented from protruding over the shoulders of the rolling surfaces 26 and 27, and the bearing 2 that uses the outer race 25 can exert a stable function.

As in this embodiment, if the tubular body having the crowning shape, in which the radially outer surface has the maximum radially-outer diameter in the axial center portion, is adopted as the rawmaterial (blank) 34 of the outer race, a thickness dimension of the blank 34 is large in the axial center portion, and the reducing step of reducing the circumferential groove 35a and the increasing step of increasing the shoulder height can be facilitated.

Any of the following cases is acceptable. In the first case, the raw material of the outer race is the SUJ2, and the heat treatment after the cold rolling step is the immersion quenching. In the second case, the rawmaterial is the SUJ2, and the heat treatment is the high-frequency quenching. In the third case, the raw material is the medium and high carbon steel containing 0.40 to 0.80 weight% of C, and the heat treatment is the high-frequency quenching. As described above, the material and the heat treatment, which are generally used for this type of outer race, can be used. Therefore, the cost reduction can be achieved.

In the second cold rolling step 18, the annular recessed portion forming step of forming the annular recessed portion 51 through reducing the circumferential groove 35a of the roughly processed outer race 36A and the increasing step of increasing the shoulder height of the rolling surfaces 26 and 27 are performed. However, as another embodiment, the increasing step of increasing the shoulder height of the rolling surfaces 26 and 27 does not have to be performed.

Incidentally, in the outer race production method, as illustrated in FIG. 13, after the first cold rolling step 17, an annealing step 19 may be performed before the second cold rolling step 18. Here, the annealing is heat treatment performed in such a manner that, when a temperature of the raw material returns to the room temperature after the raw material is heated and soaked to an appropriate temperature, the raw material is cooled under such a condition where the raw material turns to a structure state approximate to equilibrium. The annealing includes various types such as softening annealing and stress removal annealing. The softening annealing is heat treatment of heating a steel product to a temperature close to an Ac1 transformation point for the purpose of lowering hardness of the steel product to a predetermined level. The stress removal annealing is heat treatment of cooling a steel product to an appropriate temperature after heating and soaking the steel product to another appropriate temperature for the purpose of reducing an internal stress thereof without essentially changing a structure thereof. The softening annealing is optimum for pretreatment of the plastic working and the cutting process, and the stress removal annealing is optimum for removing a residual stress.

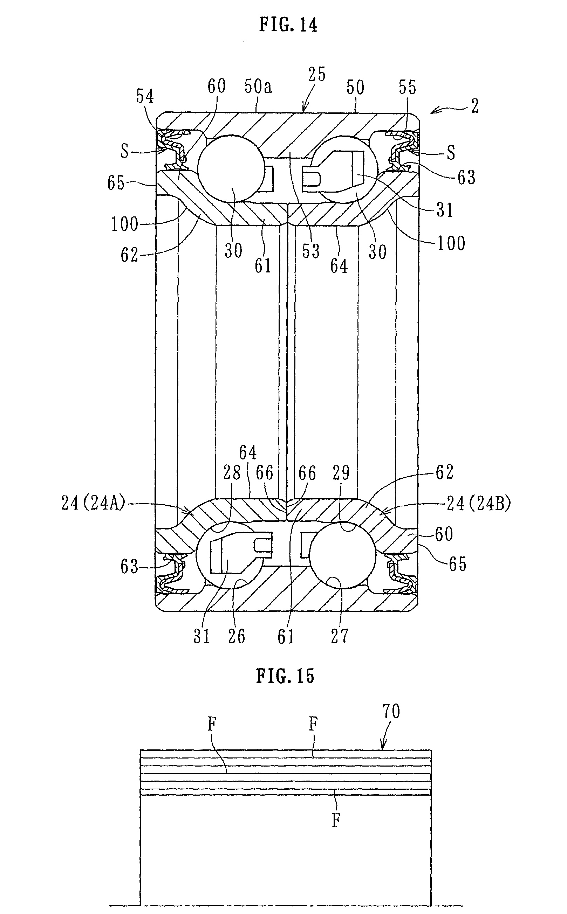

Next, FIG. 14 illustrates a third embodiment. In this case, as illustrated in FIG. 14, a roller bearing 2 includes: an outer race 25 having double-row outer rolling surfaces 26 and 27 formed in an inner circumference thereof; a pair of inner races 24A and 24B having inner rolling surfaces 28 and 29 formed in outer circumferences thereof, which are opposed to the outer rolling surfaces 26 and 27 of the outer race 25; and double-row rolling elements 30 rotatably housed between the outer rolling surfaces 26 and 27 of the outer race 25 and the inner rolling surfaces 28 and 29 of the inner races 24A and 24B. The rolling elements 30 are retained by cages 31 provided between the outer race 25 and the inner races 24A and 24B. Seal members S are inserted into both opening portions (opening portions between the outer race 25 and the inner races 24A and 24B) of the roller bearing 2.

In the outer race 25, in an axial center portion of a radially inner surface thereof, a circumferentially protruding portion (expanded portion) 53 is provided, and on both sides of the circumferentially protruding portion 53, the outer rolling surfaces 26 and 27 are formed. Further, seal grooves 54 and 55 are formed on outsides of the outer rolling surfaces 26 and 27. As described later, a radially outer surface 50 of the outer race 25 serves as a fitting surface 50a press-fitted into the knuckle N. As a material of the outer race 25, there can be used blister steel (cemented steel) such as SCr420 and SCM415, SCM440, cold rolled steel, carbon steel such as S53C, bearing steel such as SUJ2, and the like. A production method of the outer race 25 is similar to that of the conventional outer race, which is illustrated in FIG. 31.

The outboard-side inner race 24A and the inboard-side inner race 24B can be formed of a common part. Note that a side of the bearing, which is located on the outside of the vehicle in a state where the bearing is assembled to the vehicle, is referred to as the outboard side (left side in FIG. 14), and a side of the bearing, which is located on a center side of the vehicle in the above-mentioned state, is referred to as the inboard side (right side in FIG. 14).

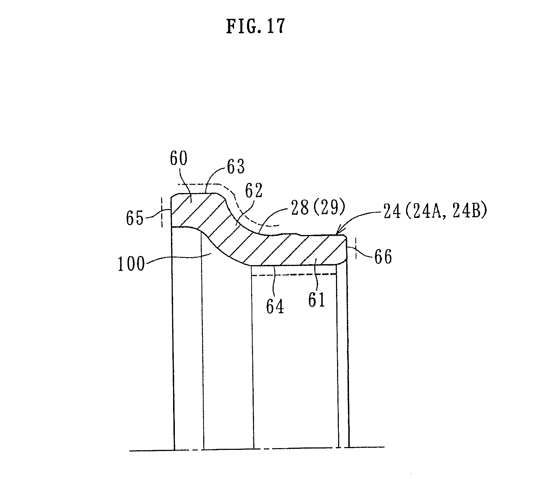

As illustrated in FIG. 17, each of the inner races 24 (24A, 24B) is formed of a larger-diameter portion 60, a smaller-diameter portion 61, and a tapered portion 62 between the larger-diameter portion 60 and the smaller-diameter portion 61. In this case, a radially outer surface of the larger-diameter portion 60 serves as the seal mounting surface 63, and a radially outer surface of the tapered portion 62 serves as the rolling surface 28 (29). Therefore, as compared with the inner races 158 and 159 illustrated in FIG. 30 and the like, the inner races 24 (24A, 24B) have a shape in which thickness-reduced portions 100 are formed in radially inner portions on axial both end portion sides thereof. Further, a radially inner surface of the smaller-diameter portion 61 serves as a hub wheel fitting surface 64.

Similarly to the outer race 25, each of the inner races 24 is also formed by performing the cold rolling for a raw material of the inner race, which has a raw shape. The raw material is quenched/tempered by the heating furnace,the high-frequency heating, and the like, and the entire or surface thereof is hardened, and thereafter, the raw material is subjected to the cutting process. In other words, the quenched steel cutting is performed. In this case, as illustrated by the broken lines of FIG. 17, the radially inner surface 64, both end surfaces 65 and 66, the seal mounting surface 63, and the inner rolling surface 28 (29) are subjected to the quenched steel cutting. As the cutting process, not the quenched steel cutting after the heat treatment, but a conventional step may be used, in which the material is lathed in a raw state after the rolling process.

Further, also as the raw material of the inner race 24, a raw material similar to the raw material of the outer race 25 is used, which is obtained by spheroidizing and annealing the martensitic stainless steel. Further, hardness of at least the rolling surface 28 (29) is set at 55 to 64 HRC.

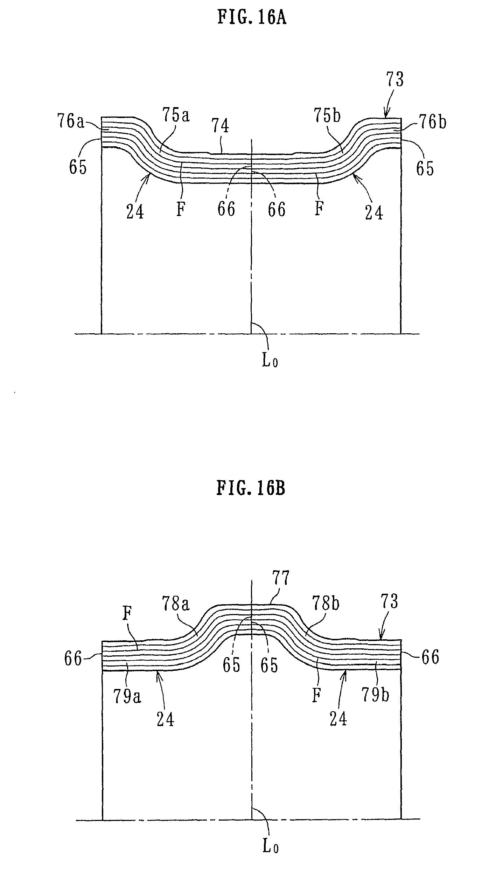

In the above-mentioned forming method, one inner race is taken out as the raw material; however, a pair of the inner races may be taken out from one raw material. Specifically, a cylindrical raw material 70 as illustrated in FIG. 15, from which the pair of inner races can be taken out, is formed, and as illustrated in FIG. 16A, an inner-race-forming raw material 73 (material having a shape in which a pair of inner races are integrally coupled to each other) is formed by the cold rolling. Specifically, the inner-race-forming raw material 73 is formed of a cylindrical body having a cylindrical body portion 74 in an axial center thereof, and having larger-diameter end portions 76a and 76b provided continuously with both ends of the body portion 74 while interposing taper portions 75a and 75b therebetween.

The inner-race-forming raw material 73 thus configured is cut at an axial center thereof, and a pair of inner races 24 (24A) and 24 (24B) are formed. Inotherwords, theinner-race-forming raw material 73 is cut along a centerline L0. In this case, the inner-race-forming raw material 73 is quenched/tempered by the heating furnace, the high-frequency heating, and the like, and the entire or surface thereof is hardened, and thereafter, the inner-race-forming rawmaterial 73 is cut into halves and is subjected to the cutting process. The larger-diameter end portion 76a serves as the larger-diameter portion 60 of the inner race 24, the smaller-diameter body portion 74 serves as the smaller-diameter portion 61 of the inner race 24, and the radially outer surface of the taper portion 75a (75b) serves as the inner rolling surface 28 (29) of the inner race 24. Further, the radially inner surface 64, both end surfaces 65 and 66, the seal mounting surfaces 63, and the inner rolling surfaces 28 (29) are subjected to the quenched steel cutting. Note that, such work of cutting the inner-race-forming raw material 73 into two may be performed either before the heat treatment or after the heat treatment. Further, as the cutting process, not the quenched steel cutting after the heat treatment, but the conventional step may be used, in which the material is lathed in a raw state after the rolling process.

The inner-race-forming raw material 73 may be a material having such a shape as illustrated in FIG. 16B. An inner-race-forming raw material 73 in this case is formed of a cylindrical body having a larger-diameter portion 77 in an axial center thereof, and having smaller-diameter end portions 79a and 79b provided continuously with both ends of the larger-diameter portion 77 while interposing taper portions 78a and 78b therebetween.

The inner-race-forming raw material 73 is cut along the centerline L0 after being formed by the plastic working. In this case, the inner-race-forming raw material 73 is quenched/tempered by the heating furnace, the high-frequency heating, and the like, and the entire or surface thereof is hardened, and thereafter, the inner-race-forming raw material 73 cut into halves and is subjected to the cutting process. Note that, such work of cutting the inner-race-forming raw material 73 into two may be performed either before the heat treatment or after the heat treatment. Further, as the cutting process, not the quenched steel cutting after the heat treatment, but the conventional step may be used, in which the material is lathed in a raw state after the rolling process. Further, in the inner-race-forming raw material 73 illustrated in FIG. 16A, cut end surfaces thereof become the end surfaces 66 on the smaller diameter side, whereas, in the inner-race-forming raw material 73 illustrated in FIG. 16B, cut end surfaces thereof become the end surfaces 65 on the larger diameter side.

As described above, if the raw material 70 as illustrated in FIG. 15 is used, the pair of inner races 24 can be formed at one time, and the enhancement of the productivity can be achieved. Note that the inner races 24 may also be formed by press working as well as the cold rolling process.

As described above, the inner races 24A and 24B are formed by the cold rolling, and accordingly, the enhancement of the yield of the material of the inner races 24 and the like can be achieved. Specifically, unlike the cutting process of cutting off extra portions of the raw material, the cold rolling can form a product through thickening a raw material thinner in radially outer diameter than the product, and accordingly, a waste of the material is small. Further, in the rolling process, a processing time is short, and a life of each tool is long, and so on, and accordingly, the productivity is increased as compared with the cutting process. Further, though it is necessary to exchange the tools (mandrel, forming roll) to be used in response to the processed article, stable processing accuracy can be obtained. Further, unlike the cutting process, the fiber flows (fibrous metal structure) are not cut. Therefore, the processed product can obtain high strength.

As described above, the bearing device for a wheel according to the present invention can achieve the enhancement of the yield and productivity of the inner races 24A and 24B, and can achieve the cost reduction. In addition, the inner races 24A and 24B can obtain the stable processing accuracy and the high strength, and can achieve the quality enhancement of the bearing. Further, the thickness-reduced portions 100 are formed in the radially inner portions on the axial both end portion sides, and accordingly, weight reduction of the inner races 24A and 24B can be achieved, and the fuel consumption reduction can be achieved.

Incidentally, the inner races 24A and 24B have the shape illustrated in FIG. 14 and the like, and accordingly, can be formed by the plastic working such as the press working other than the cold rolling process. Even if the inner races 24A and 24B are formed by the press working, the enhancement of the yield and the productivity can be achieved, and the stable processing accuracy can be obtained.

In the inner race production method of the present invention, if the inner-race-forming raw material 73 formed by the cold rolling is cut into halves at the axial center thereof, the pair of inner races 24A and 24B can be formed. Therefore, the pair of inner races 24A and 24B are individually formed by the cold rolling. If the inner races 24A and 24B are formed by the cold rolling as described above, the enhancement of the yield and the productivity can be achieved, and in addition, the stable processing accuracy can be obtained.

In addition, the thickness of each of the inner races is set to be set substantially the same over the axial overall length thereof, and the thickness-reduced portions 100 formed by such a non-cutting process can be formed stably and surely on the radially inner portions on the axial both end portion sides. Accordingly, weight reduction of the produced inner races can be achieved.

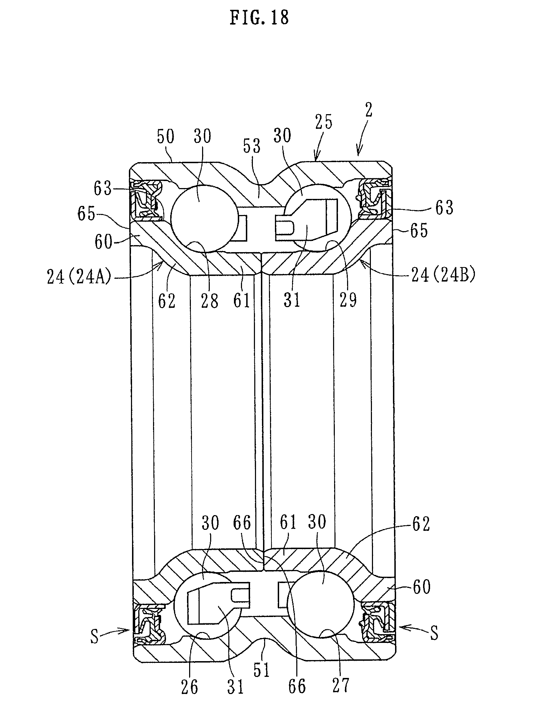

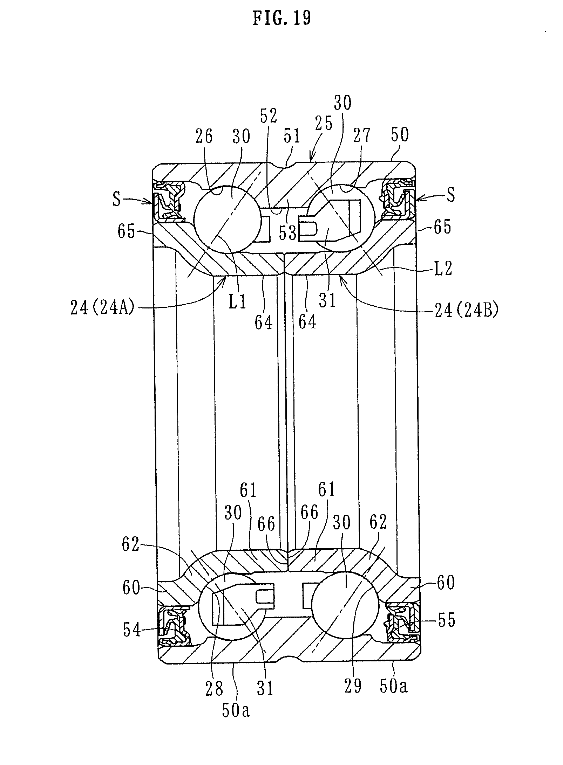

Next, FIG. 18 illustrates a fourth embodiment of the double-row angular bearing. In this case, the outer race 25 of the double-row angular bearing illustrated in FIG. 1 and the inner races 24 of the double-row angular bearing illustrated in FIG. 14 are used. In the fourth embodiment of the double-row angular bearing illustrated in FIG. 19, the outer race 25 of the double-row angular bearing illustrated in FIG. 9 and the inner races 24 of the double-row angular bearing illustrated in FIG. 14 are used.

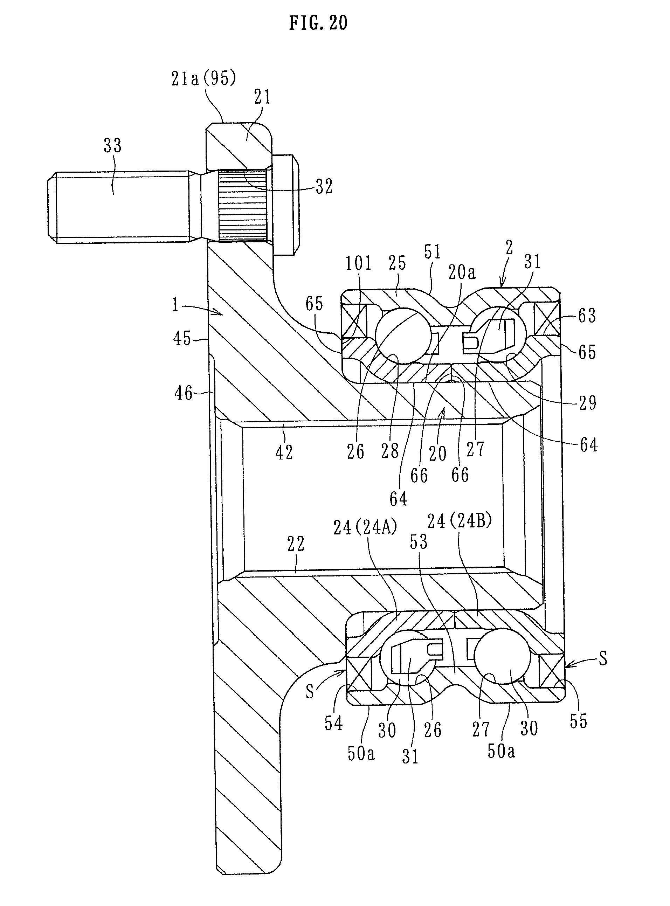

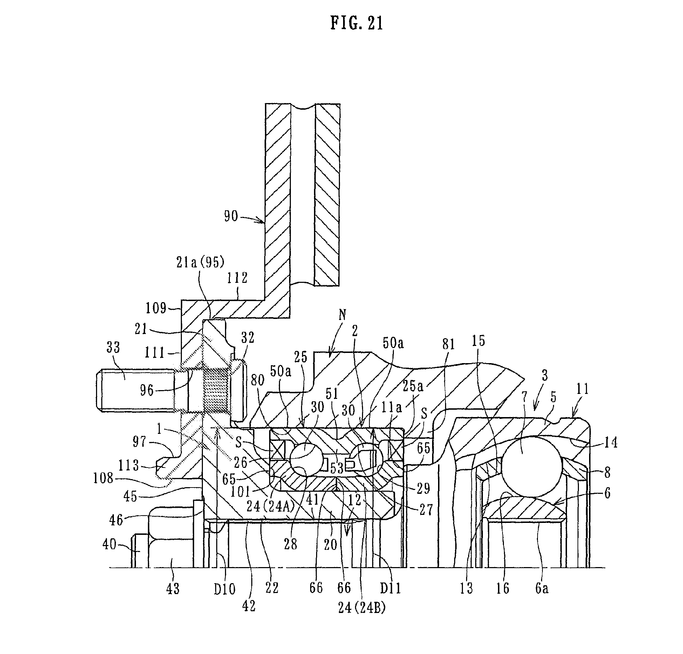

FIG. 20 and FIG. 21 illustrate a bearing device for a wheel, which uses the double-row angular bearing illustrated in FIG. 18. The bearing device for a wheel is configured in such a manner that a hub wheel 1, the double-row roller bearing 2, and a constant velocity universal joint 3 are integrated with one another.

As illustrated in FIG. 21, the constant velocity universal joint 3 mainly includes an outer race 5 as an outer joint member, an inner race 6 as an inner joint member arranged on an inner side of the outer race 5, a plurality of balls 7 provided between the outer race 5 and the inner race 6 to transmit torque, and a cage 8 provided between the outer race 5 and the inner race 6 to retain the balls 7. An end portion of a shaft (not shown) is press-fitted into a shaft hole inner diameter 6a of the inner race 6 to effect spline fitting, whereby connection with the shaft is effected so as to allow torque transmission.

The outer race 5 includes a mouth section 11 and a stem section (shaft section) 12, and the mouth section 11 is formed into a cup-like shape open at its one end. In an inner spherical surface 13 thereof, there are formed a plurality of axially extending track grooves 14 at equal circumferential intervals. The track grooves 14 extend to an opening end of the mouth section 11. The inner race 6 has in an outer spherical surface 15 thereof a plurality of axially extending track grooves 16 formed at equal circumferential intervals.

The track grooves 14 of the outer race 5 and the track grooves 16 of the inner race 6 are paired with each other, and one ball 7 as a torque transmission element is incorporated into a ball track formed by each pair of track grooves 14 and 16 so as to be capable of rolling. The balls 7 are provided between the track grooves 14 of the outer race 5 and the track grooves 16 of the inner race 6 to transmit torque. The constant velocity universal joint in this case is of the Rzeppa type. However, it is also possible to adapt a constant velocity universal joint of some other type such as an undercut-free type in which each of the track grooves has a linear straight portion provided to a groove bottom.

The outer race 5 and inner race 6 of the constant velocity universal joint 3 are made, for example, of medium carbon steel such as S53C, which contains 0.40 to 0.80 weight% of C. The track grooves 14 and 16 and a region from a shoulder portion (bottom wall outer surface 11a) of the mouth section 11 to an outer peripheral surface (radially outer surface) of the shaft section 12 are subjected to hardening treatment to set hardness thereof at approximately 58 to 64 HRC by the high-frequency quenching and the like.

The hub wheel 1 includes a cylindrical section 20, and a flange 21 provided in an end portion of the cylindrical section 20, the end portion being on a side opposite to the joint side. Further, the shaft section 12 of the outer race 5 is inserted into a hole portion 22 of the cylindrical section 20 of the hub wheel 1. In the shaft section 12, in an end portion thereof on a side opposite to the mouth section, a screw portion 40 is formed. A spline portion 41 is formed between the screw portion 40 and the mouth section 11. Further, on an inner peripheral surface (radially inner surface) of the cylindrical section 20 of the hub wheel 1, a spline portion 42 is formed. In the case where the shaft section 12 is inserted into the cylindrical section 20 of the hub wheel 1, the spline portion 41 on the shaft section 12 side and the spline portion 42 on the hub wheel 1 side engage with each other.

Then, a nut member 43 is screwed to the screw portion 40 of the shaft section 12, which protrudes from the cylindrical section 20, whereby the hub wheel 1 and the outer race 5 are coupled to each other. In this case, in an end surface 45 of the hub wheel 1, which is on a side opposite to the mouth section, a dented portion 46 is provided along an opening portion of the hole portion 22, and a seat portion of the nut member 43 comes into contact with the dented portion 46. In the flange 21 of the hub wheel 1, bolt inserting holes 32 are provided. Hub bolts 33 for fixing a wheel and a brake rotor 90 to the flange 21 are mounted into the bolt inserting holes 32. Note that, the hub wheel 1 is made, for example, of the medium carbon steel such as S53C, which contains 0.40 to 0.80 weight% of C, and at least a region from a radially outer surface 20a of the cylindrical portion 20 to an end surface 101 of the hub wheel 1 is subjected to the hardening treatment to set hardness thereof at approximately 58 to 64 HRC by the high-frequency quenching and the like.

Next, an assembly method of the bearing device for a wheel, which is configured as described above, is described. First, as illustrated in FIG. 20, a unit body is configured, in which the bearing 2 is incorporated into the hub wheel 1. Specifically, the fitting surfaces 64 and 64 of the inner races 24A and 24B of the bearing 2 in an assembled state are press-fitted onto the radially outer surface 20a of the cylindrical section 20 of the hub wheel 1. In this case, the end surface 65 of the inner race 24A comes into contact with the end surface 101 of the hub wheel 1.

The unit body thus assembled and the outer race 5 of the constant velocity universal joint 3 are coupled to each other. In this case, the stem shaft section 12 of the outer race 5 is inserted into the hole portion 22 of the hub wheel 1, and the nut member 43 is screwed to the screw portion 40 that protrudes from the hole portion 22 to the outboard side. In such a way, as illustrated in FIG. 21, the bottom wall outer surface 11a of the mouth section 11 comes into contact with the end surface 65 of the inner race 24B on the inboard side.

Therefore, in a state where touched surfaces as the smaller-diameter side end surfaces 66 and 66 of the pair of inner races 24A and 24B are touched against each other, the pair of inner races 24A and 24B are sandwiched between the boss portion end surface 101 and the bottom wall outer surface 11a of the mouth section 11, and a pre-load can be imparted to the inner races 24A and 24B.

In the bearing device for a wheel, which is configured as described above, the knuckle fitting surface 50a of the outer race 25 of the roller bearing 2 is press-fitted into the radially inner surface 80 of the knuckle N. In this case, an outer diameter dimension D11 of the knuckle fitting surface 50a is set slightly larger than an inner diameter dimension D10 of the radially inner surface 80 of the knuckle N. Specifically, the dimensions D10 and D11 are set so that, by a tightening margin between the knuckle fitting surface 50a and the radially inner surface 80 of the knuckle, relative shifts between the knuckle N and the outer race 25 in the axial and circumferential directions can be regulated.

In this case, for example, when a quotient of a fitting surface pressure divided by a fitting area between the outer race 25 and the knuckle N is defined as a fitting load therebetween, a value obtained by dividing the fitting load by an equivalent radial load of the roller bearing is defined as a creep-generating limit coefficient. Designing specifications of the outer race 25 are set in consideration of the creep-generating limit coefficient in advance.

Therefore, by the tightening margin between the knuckle fitting surface 50a and the radially inner surface 80 of the knuckle, an axial drop of the outer race 25 and a circumferential creep thereof can be prevented. Here, the creep refers to that the bearing slightly moves in the circumferential direction to turn the fitting surface into a mirror surface owing to a shortage of the tightening margin, a processing accuracy failure of the fitting surface, and the like, and depending on a case, the bearing is fused to the knuckle while being accompanied with galling.

Further, an extended portion 81 that protrudes to the radially inner side is provided on the radially inner surface 80 of the knuckle. The bearing 2 is press-fitted from the outboard side, whereby the inboard-side end surface 25a of the outer race 25 comes into contact with the expanded portion 81.

As illustrated in FIG. 21, the brake rotor 90 is mounted to the hub wheel 1. The brake rotor 90 includes a short cylindrical center mounting portion 109 having an axial center hole 108, and the center mounting portion 109 comes into contact with the flange 21 of the hub wheel 1.

The center mounting portion 109 includes a disc portion 111 having a through hole, and a short cylindrical portion 112 extended from a radially outer portion of the disc portion 111 to the inboard side. On a circumferential edge portion of the through hole of the disc portion 111, an outer collar portion 113 extended to the outboard side is provided, and the axial center hole 108 is formed of a radially inner hole of the outer collar portion 113, and the through hole of the disc portion 111.

In this case, the disc portion 111 comes into contact with an outboard-side end surface of the hub wheel 1 (hub wheel end surface formed of the outboard-side end surface 45 of the cylindrical section 20, and of an outboard-side end surface of the flange 21, the outboard-side end surface being arranged flush and continuously with the end surface 45) . In addition, a radially inner surface of the short cylindrical portion 112 on the disc portion 111 side comes into contact with a radially outer portion 21a of the flange 21 of the hub wheel 1. In other words, the radially outer portion 21a of the flange 21 of the hub wheel 1 forms a brake pilot portion 95 that guides the brake rotor 90. Note that, in the disc portion 111, there are provided through holes 96 through which the hub bolts 33 are inserted.

As described above, the brake rotor 90 is mounted, whereby a radially outer surface of the outer collar portion 113 forms a wheel pilot portion 97 fitted to an inner circumference of the wheel (not shown).

The bearing device for a wheel according to the present invention is a device in which the roller bearing 2 in the assembled state is integrated with the hub wheel 1 by being press-fitted thereto. Accordingly, at a customer (assembly factory of automobiles, and the like), the step of press-fitting the hub wheel 1 into the bearing 2 can be omitted. Therefore, reduction of the number of assembling process steps at the customer can be achieved, and an enhancement of assembling workability can be achieved.

The outer race 25 is formed by the cold rolling, and hence the enhancement of the yield and productivity of the outer race 25 can be achieved, and the cost reduction can be achieved. In addition, the outer race 25 can obtain the stable processing accuracy and the high strength, and the quality enhancement of the bearing 2 can be achieved. In the present invention, the inner races 24 are also formed by the cold rolling, or are made of pressed plates, and accordingly, similarly to the outer race 25, the enhancement of the yield and productivity of the inner races can be achieved, and the cost reduction can be achieved. In addition, the inner races 24 can obtain the stable processing accuracy and the high strength, and the quality enhancement of the entire bearing can be achieved.

In the axial center portion of the radially inner surface of the outer race 25, the expanded portion 53 that is expanded to the radially inner side is provided, whereby the rolling surfaces 26 and 27 can be formed in the radially inner surface, and the formation of the outer race 25 can be facilitated. In addition, the thickness of the outer race 25 can be maintained to be substantially constant along the axial direction, and the weight reduction and the cost reduction can be achieved. Specifically, the circumferential recessed portion 51 is provided in the axial center portion of the radially outer surface of the outer race 25, whereby a thick region that is functionally useless can be omitted, and the weight reduction can be achieved.

In the bearing device in which the end portion of the hub wheel 1 is caulked and the pre-load is imparted to the inner races 24 of the roller bearing 2 press-fitted into the hub wheel 1, high-quality rotation can be obtained. The outer race 25 of the present invention is subjected to the quenched steel cutting, and accordingly, the compressive residual stress can be imparted to the top surface portion thereof, whereby the fatigue strength is enhanced, and the roller bearing 2 can exert the stable function for a long period of time. In the bearing device in which the fitting surface 50a is formed in the radially outer surface of the outer race 25 and is press-fitted into the knuckle N, simplification of the assemble work can be further achieved.

A member separate to the hub wheel 1 is mounted to the hub wheel 1, whereby the wheel pilot portion 97 is formed on the hub wheel 1. Therefore, it is not necessary to provide the wheel pilot portion 97, which is fitted to the inner circumference of the wheel, integrally with the hub wheel 1, and simplification of the shape of the entire hub wheel can be achieved. In such a way, the enhancement of the productivity can be achieved, and the cost reduction can be achieved. In addition, in the case where the wheel pilot portion 97 mounted to the hub wheel 1 is damaged, it is not necessary to replace the entire hub wheel, and only the wheel pilot portion 97 as the above-mentioned separate member just needs to be replaced, and the cost reduction can be achieved.

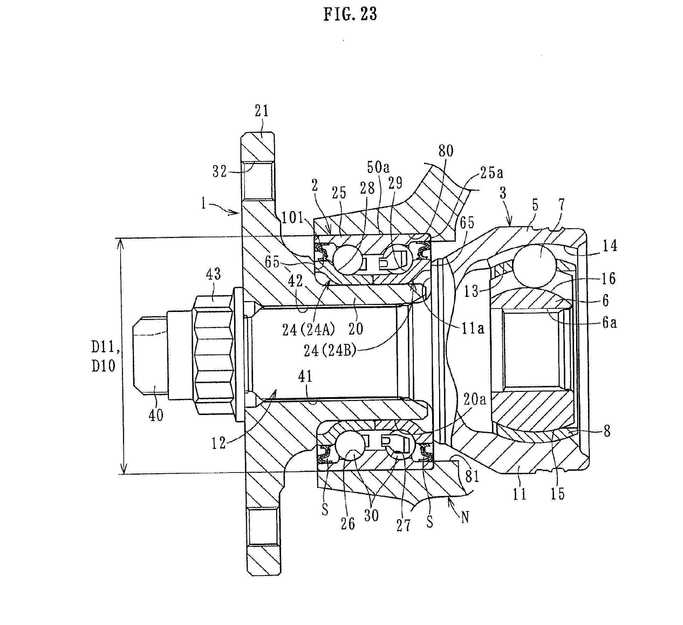

Next, FIG. 23 illustrates a bearing device for a wheel, which uses the bearing illustrated in FIG. 14. In this case, the knuckle fitting surface 50a of the outer race 25 of the roller bearing 2 is press-fitted into the radially inner surface 80 of the knuckle N. In this case, the outer diameter dimension D11 of the knuckle fitting surface 50a is set slightly larger than the inner diameter dimension D10 of the radially inner surface 80 of the knuckle N. Specifically, the dimensions D10 and D11 are set so that, by the tightening margin between the knuckle fitting surface 50a and the radially inner surface 80 of the knuckle, the relative shifts between the knuckle N and the outer race 25 in the axial and circumferential directions can be regulated.

Also in this case, when the quotient of the fitting surface pressure divided by the fitting area between the outer race 25 and the knuckle N is defined as the fitting load therebetween, the value obtained by dividing the fitting load by the equivalent radial load of the roller bearing is defined as the creep-generating limit coefficient, and the designing specifications of the outer race 25 are set in consideration of the creep-generating limit coefficient in advance. Therefore, the axial drop of the outer race 25 and the circumferential creep thereof can be prevented by the tightening margin between the knuckle fitting surface 50a and the radially inner surface 80 of the knuckle.

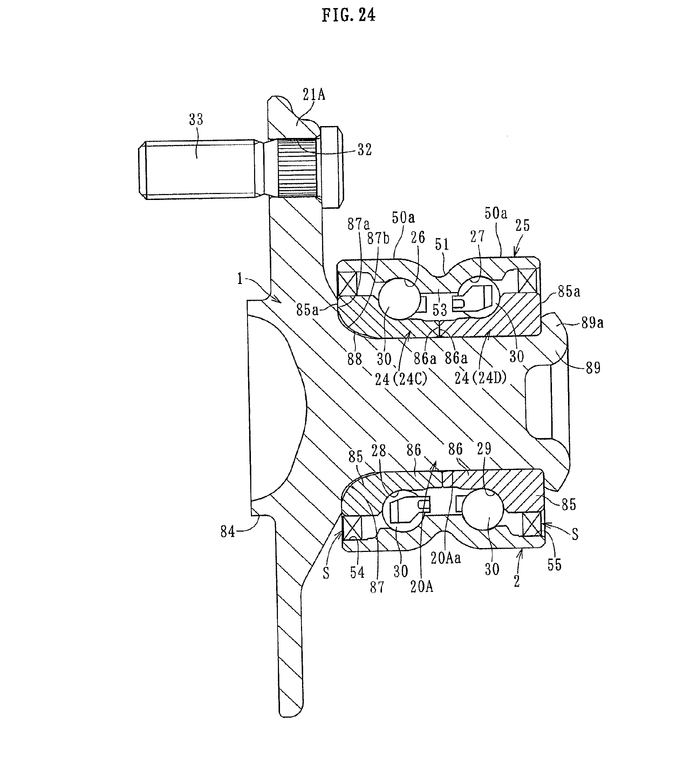

Incidentally, the bearing device for a wheel, which is illustrated in FIG. 24, is used to be driven, and as the double-row angular bearing, the bearing illustrated in FIG. 1 is used. The hub wheel 1 includes: a solid shaft section 20A; and a flange 21A provided to protrude from the shaft section 20A. Further, each of inner races 24C and 24D is formed of a short cylindrical body having a thick portion 85 and a thin portion 86, and a rolling surface 28 (29) is formed in a radially outer surface located between the thick portion 85 and the thin portion 86. Then, in a state where end surfaces (touched end surfaces) 86a and 86a of the respective thin portions 86 are touched against each other, the roller bearing 2 is press-fitted onto a radially outer surface 20Aa of a shaft section 20A of the hub wheel 1.

In this case, between the flange 21A and the shaft section 20A, there is provided a boss portion 87, in which an end surface 87a extending in a direction orthogonal to the axial direction and a recessed curved surface 87b are formed. Therefore, a radially inner surface of the thick portion 85 of the inner race 24C on the outboard side is formed into a protruding curved surface 88 corresponding to the recessed curved surface 87b. In contrast, such a protruding curved surface is not formed in a radially inner surface of the inner race 24D on the inboard side.

An inboard-side end portion of the hub wheel 1 is formed into a tubular portion 89 thereof, an inboard-side end portion of the tubular portion 89 is caulked to the outboard side, and at a caulked portion 89a thereof, a pre-load is imparted to the inner races 24 through an end surface 85a of the inner race 24D on the inboard side. Further, a pilot portion 84 is provided on an outboard-side end surface of the hub wheel 1.

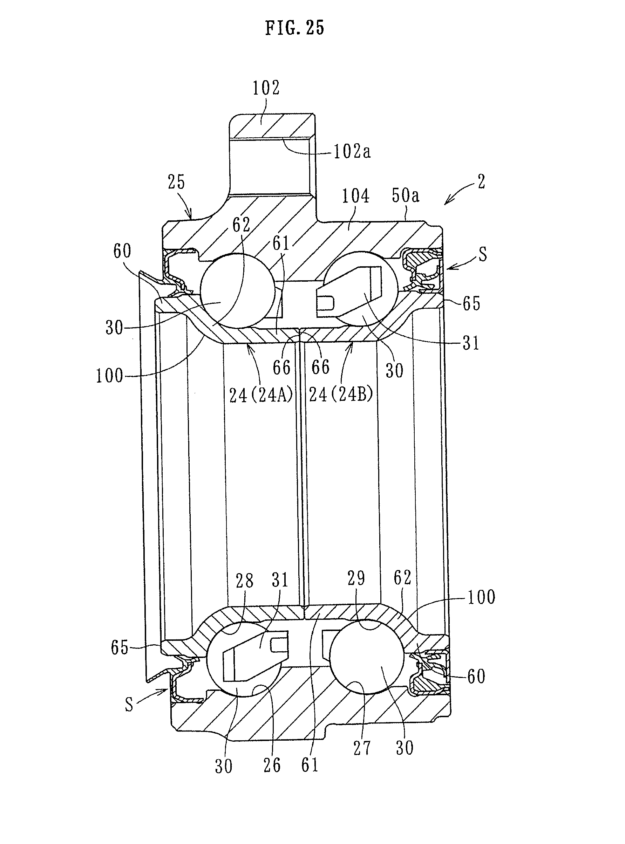

In a bearing device for a wheel, which is illustrated in FIG. 25, in a radially outer surface of an outer race 25 thereof, a vehicle body mounting flange 102 having a vehicle body mounting screw hole 102a is provided. Specifically, the outer race 25 is formed of a tubular body portion 104, and the vehicle body mounting flange 102 provided to protrude from a radially outer surface of the tubular body portion 104. Then, a radially outer surface of the outer race 25, which is located more on the inboard side than the vehicle body mounting flange 102, serves as a knuckle fitting surface 50a.

Inner races 24 in this case are similar to the inner races 24 illustrated in FIG. 14. Specifically, each of the inner races 24 (24A, 24B) is formed of a larger-diameter portion 60, a smaller-diameter portion 61, and a tapered portion 62 between the larger-diameter portion 60 and the smaller-diameter portion 61. Further, other members are also similar to those of the bearing device for a wheel, which is illustrated in FIG. 23. Therefore, the same reference symbols as those in FIG. 23 are assigned to the same members as those of the bearing device for a wheel, which is illustrated in FIG. 23, and description thereof is omitted.

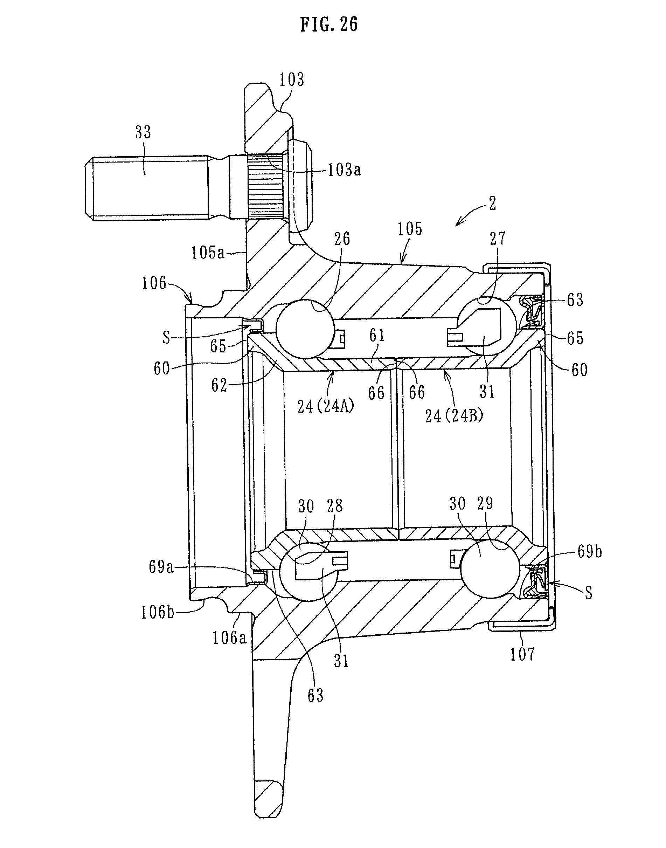

Next, a bearing device for a wheel, which is illustrated in FIG. 26, is of an outer race rotation type. Specifically, the bearing 2 includes an outer race (outward member) 105 having a wheel mounting flange 103 on an outboard side on a radially outer surface thereof. Bolt inserting holes 103a are provided in the wheelmounting flange 103, and the hub bolts 33 are mounted into the bolt inserting holes 103a. Then, outer rolling surfaces 26 and 27 are provided on a radially inner surface of the outer race 105.

Further, a pilot portion 106 is provided in an outboard-side end surface 105a of the outer race 105. The pilot portion 106 is formed of a larger-diameter brake pilot portion 106a on the end surface 105a side on the outboard side, and a smaller-diameter wheel pilot portion 106b on a side opposite to the end surface.

Inner races 24 in this case are similar to the inner races 24 illustrated in FIG. 14. Seal mounting portions 69a and 69b are formed on both end sides of the radially inner surface of the outer race 105, and further, radially outer surfaces of larger-diameter portions 60 of the inner races 24A and 24B serve as the seal mounting surfaces 63, and each of radially outer surfaces of tapered portions 62 serves as the rolling surface 28 (29). Therefore, the seal members S are inserted into opening portions between the outer race 105 and the inner races 24A and 24B.

Incidentally, the bearing device for a wheel, which is illustrated in FIG. 26, is mounted to an axle for a driven wheel, and rotatably supports the wheel. Therefore, the inner races 24A and 24B are inserted or press-fitted onto the axle. Further, a magnetic encoder 107 for detecting a rotation speed of the wheel is additionally provided on an inboard-side end portion of the outer race 105.

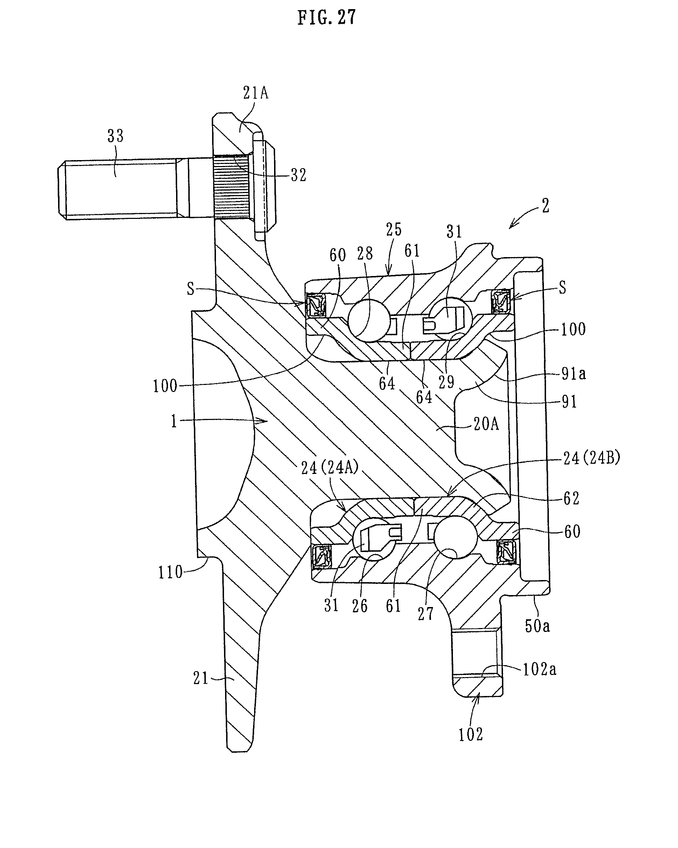

Next, a bearing device for a wheel, which is illustrated in FIG. 27, is a driven-side bearing device for a wheel, in which a hub wheel 1 includes: a solid shaft section 20A; and a flange 21A provided to protrude from the shaft section 20A. Bolt inserting holes 32 are provided in the flange 21A, and hub bolts 33 for fixing a wheel and a brake rotor to the flange 21A are mounted into the bolt inserting holes 32.

An inboard-side end portion of the hub wheel 1 is formed into a tubular portion 91, an inboard-side end portion of the tubular portion 91 is caulked to a radially outer side, and such a caulked portion 91a engages (fits) with a thickness-reduced portion 100 of an inner race 24B. Further, a pilot portion 110 is provided in an outboard-side end surface of the hub wheel 1.

Note that, an outer race 25 in FIG. 27 includes the vehicle body mounting flange 102 similarly to the outer race 25 illustrated in FIG. 25, and inner races 24 and 24 are similar to the inner races 24 and 24 illustrated in FIG. 14 and the like. Therefore, in the bearing device for a wheel in FIG. 27, the same reference symbols are assigned to similar structures to those of the bearing devices for a wheel in FIG. 14, FIG. 25, and the like, and description thereof is omitted.

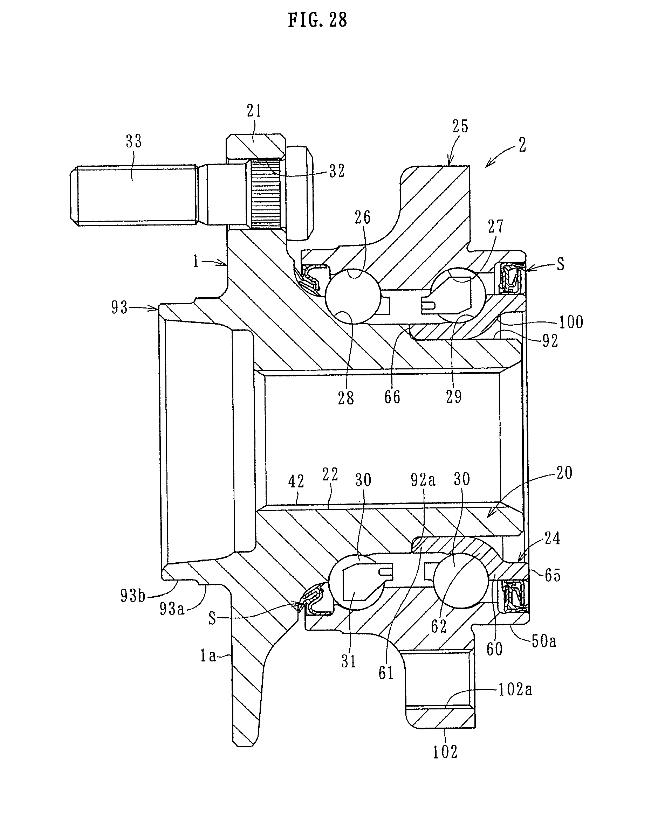

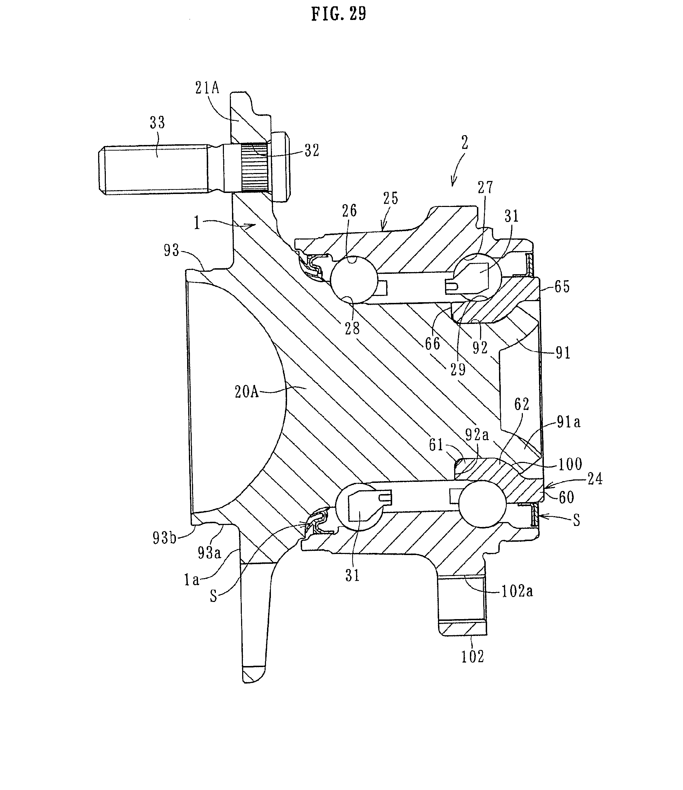

Next, FIG. 28 and FIG. 29 illustrate so-called third generations of bearing devices for wheels, in each of which an inner rolling surface 28 of a bearing 2 is formed in a radially outer surface of a hub wheel 1. Specifically, in the bearing device for a wheel in FIG. 28, a notched portion (stepped portion) 92 is provided in an inboard-side outer peripheral surface of a cylindrical section 20 of the hub wheel 1, and an inner race 24 is fitted to the notched portion (stepped portion) 92. The inner rolling surface 28 is provided in the vicinity of a flange on an outer peripheral surface of the cylindrical section 20 of the hub wheel 1.

Then, an outer rolling surface 26 of the outer race 25 and the inner rolling surface 28 of the hub wheel 1 are opposed to each other, an outer rolling surface 27 of the outer race 25 and a rolling surface 29 of the inner race 24 are opposed to each other, and rolling elements 30 are provided between the outer rolling surface 26 and the inner rolling surface 28 and between the outer rolling surface 27 and the rolling surface 29. The inner race 24 in this case is similar to the inner race 24B illustrated in FIG. 14.

In this case, though not illustrated, when the shaft section 12 of the constant velocity universal joint 3 is inserted and mounted into a hole portion of the hub wheel 1, the bottom wall outer surface 11a of the mouth section 11 comes into contact with an end surface 65 of the inner wheel 24 as in FIG. 21. Therefore, an end surface 66 of the inner race 24 comes into contact with an end surface 92a of the notched portion 92, and a pre-load can be imparted to the inner race 24.

A pilot portion 93 is provided in an outboard-side end surface 1a of the hub wheel 1. The pilot portion 93 is formed of a larger-diameter brake pilot 93a on the outboard-side end surface 1a side, and a smaller-diameter wheel pilot 93b on a side opposite to the end surface.

Further, in the bearing device for a wheel, which is illustrated in FIG. 29, as in FIG. 27, a hub wheel 1 includes: a solid shaft section 20A; and a flange 21A provided to protrude from the shaft section 20A. Then, a notched portion (stepped portion) 92 is formed in an inboard-side radially outer surface (outer peripheral surface) of the shaft section 20A, and an inner race 24 is fitted to the notched portion 92. The inner race 24 in this case is similar to the inner race 24B illustrated in FIG. 14.

Similarly to the bearing device for a wheel, which is illustrated in FIG. 27, an inboard-side end portion of the hub wheel 1 is formed into a tubular portion 91, an inboard-side end portion of the tubular portion 91 is caulked to a radially outer side, and a caul ked portion 91a thereof engages (fits) with a thickness-reduced portion 100 of the inner race 24. Further, a pilot portion 93 is provided on an outboard-side end surface of the hub wheel 1.

In each of the bearing devices for wheels, which are illustrated in FIG. 27 and FIG. 29, the radially outer portion on the inboard-side end portion of the shaft section 20A of the hub wheel 1 is caulked in the radially outer direction, and a caulked portion 91a thereof is engaged with the reduced portion 100, whereby the inner race 24 and the hub wheel 1 are integrated with each other. Therefore, the bearing 2 can be stably mounted to the hub wheel 1, and high-quality rotation that is stable for a long period can be obtained.

Hereinabove, the embodiments of the present invention are described; however, the present invention is not limited to the above-mentioned embodiments, and various modifications are possible. For example, though the blank for forming the outer race 25 is formed of the pipe material in the above-mentioned embodiments, a material may be used, which is processed in such a manner that a round bar material is cut into a predetermined dimension, and a piece cut out therefrom is formed into a ring shape by hot forging or the like, and is thereafter lathed and finished. Further, if the plastically worked article formed by the cold rolling is used as the inner race 24, the conventional outer race 155 illustrated in FIG. 31 may be used as the outer race 25.

In the case of forming the inner race 24 by the cold rolling and the like, the inner race 24 may be a ring in which a larger-diameter side end portion is bent in the radially outward direction.

The rawmaterial 34 illustrated in FIG. 11A is the tubular body having the crowning shape, in which the axial center portion of the radially outer surface has the maximum radially-outer diameter. However, the raw material 34 is not limited to the tubular body having the crowning shape as described above. Note that, the use of the double-row angular bearing is not limited to the bearing device for a wheel, and the double-row angular bearing can be applied to various devices and mechanisms, which use the double-row angular bearing. In the above-mentioned embodiments, the rolling elements as torque transmitting means for the bearing 2 are formed of the balls 30; however, tapered rollersmaybe used as the rolling elements.

### Industrial Applicability

The bearing device for a wheel according to the present invention may be used either for a driving wheel or for a driven wheel, and can effectively exert the functions thereof.

## Claims

1. A double-row angular bearing, comprising:
an inner race having inner rolling surfaces on a radially outer surface thereof;
an outer race having outer rolling surfaces on a radially inner surface thereof; and
rolling elements rotatably housed between the outer rolling surfaces of the outer race and the inner rolling surfaces of the inner race,
wherein the outer race is formed of a plastically worked article formed by cold rolling.

2. A double-row angular bearing according to claim 1, wherein an annular recessed portion is provided in an axial center portion of a radially outer surface of the outer race.

3. A double-row angular bearing, comprising:
an inner race having inner rolling surfaces on a radially outer surface thereof;
an outer race having outer rolling surfaces on a radially inner surface thereof; and
rolling elements rotatably housed between the outer rolling surfaces of the outer race and the inner rolling surfaces of the inner race,
wherein the inner race is formed of a plastically worked article formed by one of cold rolling and press working.

4. A double-row angular bearing according to any one of claims 1 to 3, wherein the plastically worked article formed by the cold rolling uses martensitic stainless steel.

5. A double-row angular bearing according to any one of claims 1 to 4, wherein an inclination of fiber flows of a rolling surface of the plastically worked article is 15° or less with respect to a tangential direction of the rolling surface except for a shoulder portion of the rolling surface and a vicinity of the shoulder portion.

6. A double-row angular bearing according to any one of claims 1 to 5, wherein:
as the plastically worked article, a blank is used, the blank being obtained by spheroidizing and annealing martensitic stainless steel containing 0.90 to 1.20 weight% of C, 1.0 weight% or less of Si, 1.0 weight% or less of Mn, 0.040 weight% or less of P, 0.030 weight% or less of S, 0.75 weight% or less of Ni, 16.0 to 18.0 weight% of Cr, and 0.75 weight% or less of Mo;
the inclination of the fiber flow of the rolling surface of the plastically worked article is 15° or less with respect to the tangential direction of the rolling surface except for the shoulder portion of the rolling surface and the vicinity of the shoulder portion; and
surface hardness of at least the rolling surface is set at 55 to 64 HRC by quenching/tempering.

7. A double-row angular bearing according to any one of claims 1 to 5, wherein:
as the plastically worked article, a blank is used, the blank being obtained by spheroidizing and annealing martensitic stainless steel containing 0.50 to 0.75 weight% of C, 0.5 weight% or less of Si, 1.0 weight% or less of Mn, 0.030 weight% or less of P, 0.030 weight% or less of S, 0.60 weight% or less of Ni, 11.5 to 13.5 weight% of Cr, and 0.50 weight% or less of Mo;
the inclination of the fiber flow of the rolling surface of the plastically worked article is 15° or less with respect to the tangential direction of the rolling surface except for the shoulder portion of the rolling surface and the vicinity of the shoulder portion; and
surface hardness of at least the rolling surface is set at 55 to 64 HRC by quenching/tempering.

8. A double-row angular bearing according to any one of claims 1 to 7, wherein, in a carbide in the plastically worked article, (a+b) /2≤50 µm is established when a length of a major axis of the carbide is "a" and a length of a minor axis of the carbide is "b".

9. A double-row angular bearing according to any one of claims 1 to 7, wherein, in a carbide in the plastically worked article, (a+b) /2≤30 µm is established when a length of a major axis of the carbide is "a" and a length of a minor axis of the carbide is "b".

10. A bearing device for a wheel, the bearing device using the double-row angular bearing according to claim 2, wherein an expanded portion expanded to a radially inner side is provided on an axial center portion of the radially inner surface of the outer race, whereby a circumferential recessed portion is provided in the axial center portion of the radially outer surface of the outer race.

11. A bearing device for a wheel, the bearing device using the double-row angular bearing according to any one of claims 1 to 10, wherein the outer race, the inner race, and the rolling elements are integrated with one another by being press-fitted onto a hub wheel in an assembled state.

12. A bearing device for a wheel according to claim 11, wherein an end portion of the hub wheel is caulked, and a pre-load is imparted to an inner race of a roller bearing press-fitted to the hub wheel.

13. A bearing device for a wheel according to claim 11, wherein the outer race is subjected to quenched steel cutting by a cutting process after heat treatment is performed after the cold rolling forming.

14. A bearing device for a wheel according to claim 11, wherein a fitting surface is formed in the radially outer surface of the outer race, and the fitting surface is press-fitted into a knuckle.

15. A bearing device for a wheel, the bearing device using the double-row angular bearing according to claim 2, wherein extensions of load application lines of the rolling elements positionally shift with respect to a gap portion formed of the annular recessed portion of the outer race and a radially inner surface of a knuckle.

16. A bearing device for a wheel, the bearing device using the double-row angular bearing according to any one of claims 3 to 9, wherein the inner race is structured so that a thickness thereof becomes substantially the same across an axial overall length thereof, and thickness-reduced portions formed by a non-cutting process are provided on radially inner portions of the inner race on axial both end portion sides.

17. A bearing device for a wheel according to claim 16, wherein the inner race comprises a pair of inner races, and the pair of inner races are mounted in a state where touched surfaces thereof are touched against each other.

18. A bearing device for a wheel according to claim 16, comprising a hub wheel, a double-row roller bearing, and a constant velocity universal joint which are united together, wherein inner rolling surfaces opposed to the outer rolling surfaces of the outer race are formed in a radially outer surface of the hub wheel, a stepped portion is formed in an inboard side of the radially outer surface of the hub wheel, and the inner race, which has the inner rolling surfaces formed in an outer circumference thereof to be opposed to the outer rolling surfaces, is fitted to the stepped portion.

19. A bearing device for a wheel according to any one of claims 16 to 18, comprising a hub wheel, a double-row roller bearing, and a constant velocity universal joint which are united together, wherein a radially outer portion of an inboard-side end portion of a shaft section of the hub wheel is caulked in a radially outer direction, and the radially outer portion thus caulked is engaged with at least one of the thickness-reduced portions of the inner race, whereby the inner race and the hub wheel are integrated with each other.

20. A bearing device for a wheel according to any one of claims 11 to 19, wherein the bearing device is used for a drive wheel.

21. A bearing device for a wheel according to any one of claims 11 to 19, wherein the bearing device is used for a driven wheel.

22. A method of producing an outer race for a bearing device for a wheel, the outer race having double-row outer rolling surfaces on a radially inner surface thereof, and having an annular recessed portion formed in an axial center portion of a radially outer surface thereof, the method comprising:
performing, by a first cold rolling process, a rough process of forming an roughly processed outer race having a circumferential groove formed in a radially outer surface thereof; and
performing, by a second cold rolling process, a finish process including an annular recessed portion forming step of forming the annular recessed portion through reducing the circumferential groove of the roughly processed outer race.

23. A method of producing an outer race for a bearing device for a wheel, the outer race having double-row outer rolling surfaces on a radially inner surface thereof, and having an annular recessed portion formed in an axial center portion of a radially outer surface thereof, the method comprising:
performing, by a first cold rolling process, a rough process of forming an roughly processed outer race having a circumferential groove formed in a radially outer surface thereof; and
performing, by a second cold rolling process, a finish process including an increasing step of increasing a shoulder height of the rolling surfaces.

24. A method of producing an outer race for a bearing device for a wheel, the outer race having double-row outer rolling surfaces on a radially inner surface thereof, and having an annular recessed portion formed in an axial center portion of a radially outer surface thereof, the method comprising:
performing, by a first cold rolling process, a rough process of forming an roughly processed outer race having a circumferential groove formed in a radially outer surface thereof by using an outer race raw material formed of a tubular body having a crowning shape in which an axial center portion of a radially outer surface has a maximum radially-outer diameter; and
performing, by a second cold rolling process, a finish process including an annular recessed portion forming step of forming the annular recessed portion through reducing the circumferential groove of the roughly processed outer race, and an increasing step of increasing a shoulder height of the rolling surfaces.

25. A method of producing an outer race according to any one of claims 22 to 24, wherein the outer race raw material is SUJ2, and heat treatment for the outer race raw material is immersion quenching.

26. A method of producing an outer race according to any one of claims 22 to 24, wherein the outer race raw material is SUJ2, and heat treatment for the outer race raw material is high-frequency quenching.

27. A method of producing an outer race according to any one of claims 22 to 24, wherein the outer race raw material is medium and high carbon steel containing 0.40 to 0.80 weight% of C, and heat treatment for the outer race raw material is high-frequency quenching.

28. A method of producing an outer race according to any one of claims 22 to 27, wherein, after the first cold rolling step, an annealing step is performed for the outer race raw material before the second cold rolling step.

29. A method of producing an inner race for a bearing, the method comprising:
forming a hollow bearing steel material into an inner-race-forming raw material by cold rolling; and
forming a pair of inner races by cutting the inner-race-forming raw material at an axial center thereof.

30. A method of producing an inner race for a bearing, the inner race having thickness-reduced portions on radially inner portions on axial both end portion sides thereof, the method comprising:
forming, by cold rolling, a hollow bearing steel material so that a thickness thereof becomes substantially the same across an axial overall length thereof; and
forming, by a non-cutting process, the thickness-reduced portions on the radially inner portions on the axial both end portion sides.
